# EUROPEAN PATENT APPLICATION

(11) **EP 4 366 347 A1**
(43) Date of publication of application: **08.05.2024**
(21) Application number: 22205808.3
(22) Date of filing: 07.11.2022
(51) Int. Cl.: H04W 8/00, H04W 36/00

(54) **METHODS AND APPARATUS FOR CELLULAR COMMUNICATION DEVICES TO ESTABLISH AND MAINTAIN PEER-TO-PEER CONNECTIONS**

(71) Applicant: INTEL Corporation, Santa Clara, CA 95054 (US)
(72) Inventor: DEV, Rishav, 562125 Bangalore (IN); HEGDE, Mythili, 560078 Bangalore (IN); DAS, Sajal Kumar, 560115 Bangalore (IN); CHINTAMANI, Sarat, 560077 Bangalore (IN); BEKAL MANAMOHAN, Praveen Kumar, 560103 Bangalore (IN); R, Aneesh, 629175 Thuckalay (IN); TAMRAKAR, Maruti, 490022 Durg (IN); SANGLE, Parshuram, 416234 Kolhapur (IN); KODANKANDATH, Anoob Anto, 560103 Bangalore (IN); PEDDIREDDY, Prathibha, 560087 Bengaluru (IN); PAMMI, Lakshmiravikanth, 560103 Bangalore (IN)
(74) Representative: Viering, Jentschura & Partner mbB Patent- und Rechtsanwälte

(57) **Abstract**

An apparatus for a user equipment (LTE), the apparatus including: a processor configured to: establish a direct wireless connection with a further LTE, decode cellular network information received from the further UE via direct communication over the established direct wireless connection, wherein the cellular network information comprises information associated with a cell selected by the further UE for cellular communication, and configure cellular communications with a cellular network access node of the cell based on the decoded cellular network information.

## Description

### Technical Field

This disclosure generally relates to methods and apparatus for cellular communication devices to establish and maintain peer-to-peer wireless connections.

### Background

Many cellular communication devices may be capable of establishing peer-to-peer or point-to-point wireless connections (i.e. direct wireless connections) via using various wireless communication technologies, such as Bluetooth, Wi-Fi Direct, D2D, etc., and transferring data between peer devices via the established connections. Considering certain use cases associated with cellular communication and constraints associated with the performance of radio communication service within the mobile communication network, it may be desirable to use the established direct wireless connections to configure cellular communications, transfer channel measurements, offload data packets associated with designated applications, etc.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary radio communication network;
FIG. 2 shows an exemplary internal configuration of a communication device;
FIG. 3 shows an exemplary illustration of a network environment including a cellular communication network;
FIG. 4 shows an exemplary illustration including a cell selection procedure in a cellular communication network;
FIG. 5 shows an exemplary apparatus for a UE;
FIG. 6 shows an exemplary illustration of a cell selection procedure based on cellular network information received from a further UE within the proximity;
FIG. 7 shows an exemplary illustration including a cell selection procedure that a UE may perform;
FIG. 8 shows an illustration associated with an exemplary interoperation between UEs;
FIG. 9 shows an exemplary illustration of a cell reselection procedure including a request of cell reselection information from a further UE;
FIG. 10A shows an example of a method for a UE;
FIG. 10B shows an example of a method for a UE;
FIG. 11 shows an exemplary apparatus for a UE;
FIG. 12 shows an example of a prioritization procedure associated with selective data transmissions;
FIG. 13 shows an exemplary illustration with respect to the control of communication operations with respect to the application data;
FIG. 14 shows an exemplary illustration of the exchange of information;
FIG. 15 shows an example of a method for a UE.

### Description

The following detailed description refers to the accompanying drawings that show, by way of illustration, exemplary details and aspects in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception are handled by radio-layer components such as RF transceivers and antennas, and the logical transmission and reception over the software-level connection is performed by the processors or controllers. The term "communicate" encompasses one or both of transmitting and receiving, i.e. unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

As used herein, "communication device" may refer to any type of electronic devices that are able to exchange information with at least another device, for example according to various types of radio communication technologies and using various types of communication protocols as exemplarily provided herein. Exemplarily, a communication device may be, or may include, an access point, a station, any types of user devices which may include a suitable device including a processor, that may include, a mobile device or a non-mobile device, a user equipment (UE), a computing device, such as a personal computer (PC), a desktop computer, a mobile computer, a laptop computer, a notebook computer, a tablet computer, a server, a handheld computing device, a wearable device, such as a smart bracelet, a smart watch, smart glasses, a smart ring, etc., an internet of things (IoT) device, a sensor, a mobile phone, a cellular telephone, any types of wireless accessories, such as a headphone, a headset, a microphone, a speaker, a domotics (smart home) device, a docking station, a medical device, an endoscope, a surgical robot, a hearing aid, a cochlear implant device or a system, a Bluetooth medical device, an audio communication device, a headset, a headphone, an earphone, an earbud, a true wireless earphone, a wireless speaker, etc.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("12V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4
(63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies including Wireless Personal Area Network (WPAN) standards (e.g., according to any IEEE 802.15 standard), Wi-Fi Direct, Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Bluetooth (BT) technology may use frequencies between 2.402 and 2.480 GHz, or 2.400 and 2.4835 GHz including guard bands 2 MHz wide at the bottom end and 3.5 MHz wide at the top, according to frequency-hopping spread spectrum. A communication device operating according to a Bluetooth protocol may divide data to be transmitted into packets, and transmit each packet into a channel designated for the use (e.g. of bandwidth of 1 MHz for classic Bluetooth and 2 MHz for Bluetooth Low Energy (BLE)). A communication device configured to operate according to a Bluetooth protocol may operate in a basic rate (BR) mode using a Gaussian frequency-shift keying (GFSK) modulation, and/or operate in an enhanced data rate (EDR) mode, that is considered to provide a faster data rate and lower power consumption, using a differential phase-shift keying (DPSK) (e.g. 8-DPSK) and/or differential quadrature phase-shift keying (DQPSK) (e.g. π/4-DQPSK) based on the quality of the communication channel. A communication device configured to operate according to a Bluetooth protocol may operate according to the Bluetooth Low Energy (BLE) technology that is integrated within the Bluetooth standard starting from v4.0, which operates within the same frequency spectrum, using GFSK modulation.

Wi-Fi Direct technology, which may also be referred to as Wi-Fi P2P, may be one of the exemplary technologies used with respect to peer-to-peer connections provided in this disclosure. Peer-to-peer connections may refer to point-to-point connections between two communication devices according to a peer-to-peer communication protocol. Within a peer-to-peer network, communication devices (two or more) may communicate with each other over the P2P connections established between them. A Wi-Fi Direct connection may allow communication devices to communicate over an established Wi-Fi Direct connection without an intermediary entity such as an access point or a router. Wi-Fi Direct technology allows for forming a P2P network by forming a P2P group in which a communication device may take the role of a Group Owner (GO) or a Group Client (GC).

In accordance with various aspects of this disclosure, a communication device may support a first type of communication within a mobile communication network over a network access node and a second type of communication that are direct, for example, device-to-device (D2D) communications, Bluetooth communications, Wi-Fi Direct communications, with further communication device over a direct connection (or link) between the communication device and the further communication device. In other words, a direct wireless connection may include a connection to perform peer-to-peer or point-to-point communications between a communication device and a further communication device. The communication device may perform direct communications with multiple further communication devices over one or multiple connections based on the radio communication technology adopted to implement direct wireless communications.

Communications over a network access node may include various types of configurations to support and maintain the performance of communications. Within the context of cellular communication, a terminal device (e.g. a user equipment (UE)), as a communication device, may need to perform measurements for evaluation of communication performance or may need to obtain measurement reports in order to establish, maintain, and manage communication links with a network access node (e.g. a base station, a remote radio unit, etc.). With the increasing density of cellular communication devices in a designated environment, a cellular communication device may employ using direct communications with further cellular communication devices in the same vicinity to obtain information associated with the mobile communication network instead of performing measurements or performing communications with the network access nodes under the assumption that the cellular communication device may use the obtained information (which may be referred to as "cellular network information" within this disclosure) to configure cellular communications despite the spatial difference between the cellular communication device and the further cellular communication device.

Accordingly, it may be desirable to reduce the redundancy in the network traffic, which is based on the exchange of substantially similar data with the network access node of the cell, which is used to configure cellular communications. Furthermore, it may be desirable to reduce various resources allocated for cell selection procedures or attachment mechanisms, as a UE may need to scan a number of frequency bands to determine and select a cell, which may cost a considerable amount of network bandwidth and power. Furthermore, overall uplink and downlink interactions with a network access node may be reduced, and resources may be saved. Moreover, a UE may perform a faster cell selection, as the UE may not need to perform measurements associated with the cell selection procedure and it may obtain cellular network information from a further UE within the same vicinity. The UE may also receive further measurements from the further UE to perform cell reselection. In various examples, the further UE may act as a distributing entity, which may provide cellular network information to multiple UEs in the same vicinity.

A UE may rely on proximity services (ProSe) to discover and identify further cellular communication devices that are registered to the ProSe within a proximity. In various aspects, the above-mentioned cellular communication devices may detect further cellular communication devices that are in the same vicinity by using designated procedures according to ProSe, and obtain the cellular network information from the further cellular communication devices discovered by implementing ProSe procedures (e.g. ProSe-enabled UEs).

In various aspects, cellular network information obtained from a further UE may include any type of information that is associated with the mobile communication network, in particular associated with the cell on which the further UE is camped, or to which the further UE is connected. In particular, cellular network information may include information needed to camp on the same cell or to connect to the same cell. Furthermore, cellular network information may include information based on which a UE may configure its cellular communications, which may include a cell selection procedure, a PLMN selection procedure, a cell connection procedure, a cell reconfiguration procedure, a cell handover procedure, a cell attachment procedure, etc. In various examples, cellular network information may include an attribute (e.g. a network configuration parameter) associated with the cell on which the further UE is camped, or to which the further UE is connected.

Exemplarily, cellular network information may include information associated with the cell on which the further UE is camped or to which the further UE is connected, which may be an identifier of the cell (e.g. a Cell ID) or an identifier for the respective cellular network access node, an identifier or identifiers of one or more mobile network operator providing radio communication service over the cell, a public land mobile network (PLMN) information (e.g. PLMN IDs, mobile country codes (MCCs), mobile network codes (MNCs)), standalone non-public network (SNPN) information (e.g. SNPN ID), available frequency bands of the cell detected by the further UE, the frequency bands used by the further UE to perform communications within the cell, available radio access technologies (RATs) supported by the cell known by the further UE, other available RATs within a designated proximity known by the further UE, location information (LA) or a tracking area (TA) information received by the further UE, etc.

In accordance with further aspects provided herein, a UE may employ offloading data communication with a further UE over an established direct wireless connection with the further UE instead of performing cellular communication via a network access node, when the further UE is within the same vicinity with the UE. Accordingly, it may be desirable for a UE to operate with smaller latency constraints, which may be preferable for latency-critical applications such as multiplayer games, videoconferencing, or teleconferencing applications.

A UE may implement various methods and functions to route application layer data received from an application executed by a processor of the UE at an application layer of the protocol stack, with an intention to deliver the received application layer data to a corresponding application executed by a processor of the further UE at an application layer with a proper latency to maintain an operation below the latency constraints. The UE may offload data including the application layer data over a sidelink communication to the further UE. In various examples, the UE may also use resources to perform ultra-reliable and low latency communications (URLLC) to meet the latency constraints to deliver the data including the application layer data to the further UE with less delivery time. For example, a URLLC communication may provide approximately 10 ms. end-to-end latency, while a sidelink transmission performed with an established D2D connection may provide less than 10 ms. end-to-end latency.

The UE may include a packet controller configured to identify data to be offloaded for latency-resilient communications (e.g. communications intended to deliver the data with a desired latency), such as sidelink transmissions or URLLC transmissions, and encode the data to be offloaded accordingly for a selected latency resilient transmission. The UE may also operate as a ProSe-enabled UE to obtain information related to other UEs within the proximity of the UE, and the UE may determine whether to offload the identified data to a cellular connection established with a network access node of the cellular communication network or to a D2D connection established with the recipient UE that is the recipient of the identified data based on the proximity information associated with the recipient UE.

In various examples, while the UE may offload the data identified as a low latency data at a layer of the protocol stack, the UE may still transmit data that is not identified as low latency data via the cellular connection established with the network access node of the cell without the use of URLLC communications. In particular, the data identified as the low-latency data may include data of the user plane, while the UE may still transmit data of the control plane via the cellular connection without the use of URLLC communications. The cases without the use of URLLC communications may include designated enhanced mobile broadband communications (eMBB) or massive machine type communications (mMTC).

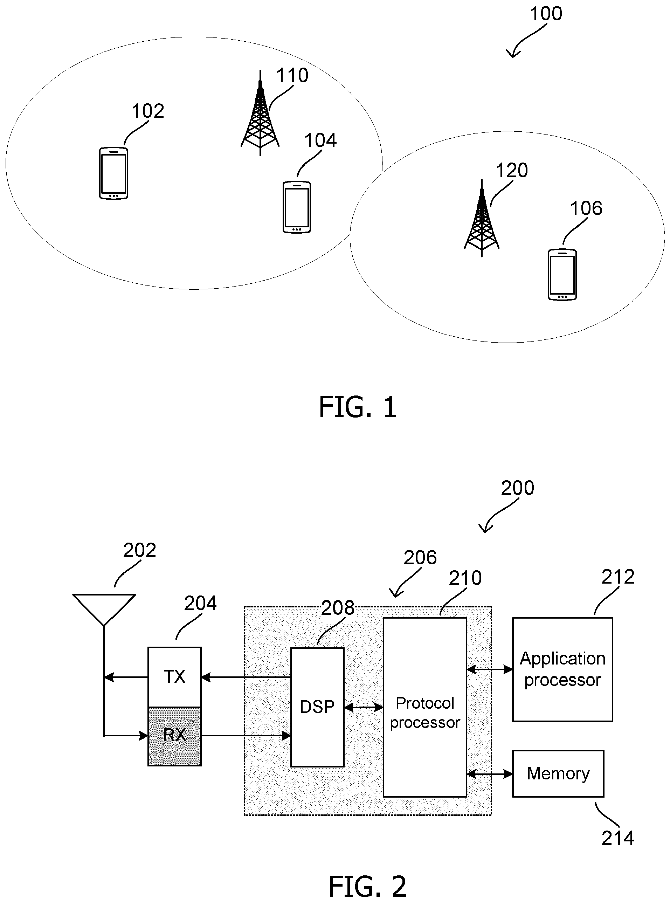

FIGs. 1 and 2 depict a general network and device architecture for wireless communications. In particular, FIG. 1 shows exemplary radio communication network 100 according to some aspects, which may include communication devices depicted as terminal devices 102, 104, and 106 and communication devices depicted as network access node 110. Radio communication network 100 may communicate with terminal devices 102 and 104 via network access node 110 over a radio access network. Although certain examples described herein may refer to a particular radio access network context (e.g., LTE, UMTS, GSM, other 3rd Generation Partnership Project (3GPP) networks, WLAN/WiFi, Bluetooth, 5G NR, mmWave, etc.), these examples are demonstrative and may therefore be readily applied to any other type or configuration of radio access network. In various examples, terminal devices 102 and 104 may communicate with each other without involvement of the radio access network, such as over a peer-to-peer network.

In an exemplary cellular context, network access node 110 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access node 110 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. Terminal devices 102 and 104 may exemplarily be terminal devices within the same vicinity (in proximity). The cellular core network may interface with one or more external data networks. In an exemplary short-range wireless context other than BT, network access node 110 and 120 may be access points (APs, e.g., WLAN or WiFi APs), while terminal device 102 and 104 may be short range terminal devices (e.g., stations (STAs)). Network access node 110 may interface (e.g., via an internal or external router) with one or more external data networks. Network access node 110 and terminal devices 102 and 104 may include one or multiple transmission/reception points (TRPs).

Network access node 110 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access node 110 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access node 110 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access node 110 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device. The communication device may include a terminal device 102 according to some aspects, and it will be referred to as terminal device 102, but the communication device may also include various aspects of network access nodes 110, 120 as well. The terminal device 102 may include antenna system 202, radio frequency (RF) transceiver 204, baseband modem 206 (including digital signal processor 208 and protocol controller 210), application processor 212, and memory 214. Although not explicitly shown in FIG. 2, in some aspects terminal device 102 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Terminal device 102 may transmit and receive radio signals on one or more radio access networks. Baseband modem 206 may direct such communication functionality of terminal device 102 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of terminal device 102 shown in FIG. 2 depicts only a single instance of such components.

Terminal device 102 may transmit and receive wireless signals with antenna system 202. Antenna system 202 may be a single antenna or may include one or more antenna arrays that each include multiple antenna elements. For example, antenna system 202 may include an antenna array at the top of terminal device 102 and a second antenna array at the bottom of terminal device 102. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Terminal device 102 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of terminal device 102 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of terminal device 102 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio terminal device 102 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Terminal device 102 may also include application processor 212 and memory 214. Application processor 212 may be a CPU, and may be configured to handle the layers above the protocol stack, including the transport and application layers. Application processor 212 may be configured to execute various applications and/or programs of terminal device 102 at an application layer of terminal device 102, such as an operating system (OS), a user interface (UI) for supporting user interaction with terminal device 102, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of terminal device 102, such as a hard drive or another such permanent memory device. Although not explicitly depicted in FIG. 2, the various other components of terminal device 102 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112.

Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

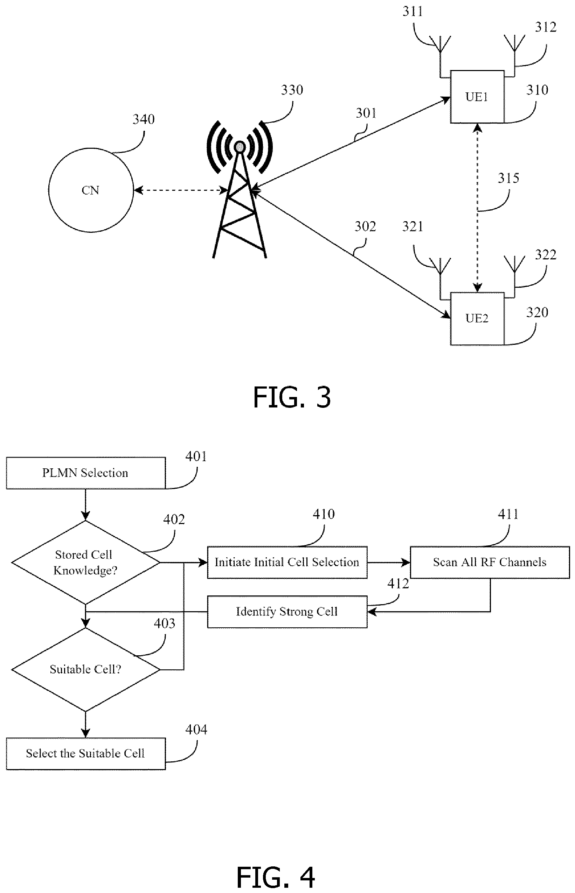

FIG. 3 shows an exemplary illustration of a network environment including a cellular communication network. The network 300 may include a plurality of UEs, such as a UE1 310 and a UE2 320 that may be communicatively coupled to and operate within a core network 340 of a mobile communication network via a network access node 330, such as an evolved node B (eNB), next-generation node B (gNB). In a virtualized mobile network environment including a disaggregated radio access network (e.g. open radio access network (O-RAN) architecture), the network access node may include a remote radio unit (e.g. O-RU) that may be communicatively coupled to further entities configured to provide various services associated with cellular radio communication via designated network functions (e.g. a central unit (e.g. O-CU), a distributed unit (e.g. O-DU). Accordingly, each UE 310, 320 may communicate with the network access node 330 over established cellular connections 301, 302 respectively. Furthermore, when UEs 310, 320 are within a certain proximity with each other, the UEs 310, 320 may establish a direct wireless connection 315 with each other in order to communicate directly without the involvement of the network access node 330 and/or the core network 340 to communicate user data.

In various examples, each UE 310, 320 may include a first transceiver including a first antenna 311, 321 respectively to transmit and receive cellular communication signals, and each UE 310, 320 may further include a second transceiver including a second antenna 312, 322 respectively to transmit and receive radio communication signals according to another radio communication technology (e.g. Bluetooth, WLAN, etc.) for direct wireless communication. In such cases, UEs 310, 320 may include further components configured to facilitate the communication of another radio communication technology (e.g. Bluetooth host processor, Bluetooth controller, etc.). In such examples, UEs 310, 320 may establish a direct wireless connection 315, and communicate over an established direct wireless connection 315 by transmitting/receiving radio communication signals according to the another radio communication technologies. In various examples, UEs 310, 320 may establish a D2D connection, as the direct wireless connection 315, to communicate via cellular communication signals directly with each other. In some examples, the core network 340 may assist the communication via D2D connection between UEs 310, 320, including the establishment of the D2D connection, by certain functions, some of which are provided herein (e.g. ProSe).

Various aspects provided herein may include one of UEs (e.g. UE1 310) may receive cellular network information from another UE that has been discovered in the vicinity (e.g. UE2 320) over an established direct wireless connection 315. The cellular network information may include information associated with the cell operated by the network access node 330, to which the UE2 320 is connected, or on which the UE2 320 camped. In various examples, the UE1 310 may establish the cellular connection 301 with the network access node 330 based on cellular network information received from the UE2 320. Furthermore, the UE1 310 may receive further cellular network information from the UE2 320, and configure cellular communications over the established cellular connection 301 based on received cellular network information. In some examples, the UE1 310 may further select another cell based on received cellular network information which may represent that UE320 has reselected the another cell.

Various aspects provided herein may include one of UEs (e.g. UE1 310) may configure its data transmissions selectively via an established cellular connection (e.g. the cellular connection 301) with a cellular network via the network access node 330 and the core network 340 or with an established direct wireless connection 315. The established direct wireless connection 315 may be a D2D connection. In case the UE1 310 may perform the data transmission to a further UE (e.g. UE2 320) that is within the vicinity, the UE1 310 may determine that the UE2 320 is within a proximity for a direct communication, and the UE1 310 may send the data addressed to the UE2 320 over the established direct wireless connection 315. In various examples, the UE1 310 may also encode the data that is addressed to the UE2 320 to perform URLLC communications over the cellular connection 301 to maintain latency constraints associated with the communication. The encoded data may be data of a particular application executed by the processor of the UE1 310.

In various aspects, each UE 310, 320 may include a ProSe application to provide operations associated with the ProSe. ProSe may include services that a mobile communication network, such as a 3GPP system may provide, which the services are based on UEs that are in proximity to each other. ProSe may include a discovery service in which UEs may discover at least the presence of each other. The discovery service may be a core network level ProSe discovery (e.g. EPC-level ProSe discovery), or a direct discovery. The direct discovery may include a discovery procedure executed between UEs or it may include an assisted discovery (e.g. EPC-assisted WLAN direct discovery) which may also involve other radio access technologies.

In a ProSe discovery, a UE may detect another UE within proximity via cellular radio access (e.g. Evolved Universal Mobile Telecommunications System Terrestrial Radio Access (E-UTRA) or WLAN direct radio signals. In direct discovery, the discovery may be based on a first model in which UEs (i.e. announcing UEs) may announce certain information for UEs in proximity, so another UE that monitors certain information of interest (i.e. monitoring UE) may discover the UEs. The announcing UE may broadcast discovery messages at discovery time intervals, and the monitoring UEs may receive them. The discovery may be based on a second model in which a UE may transmit a request including information associated with the discovery (i.e. discoverer UE), while another UE that receives the request message may respond with a response (i.e. discoveree UE). In various examples, the discovery procedure may involve a ProSe function (e.g. a network function in the core network) or a ProSe Application server (e.g. in data network) which may assist the discovery procedure via quasi-bookkeeping functions. UEs may exchange messages with the ProSe function and/or the ProSe Application server to register themselves for the discovery procedure, to get authorized, to receive information representative of other UEs within the proximity (e.g. proximity alerts, announcing alerts). Based on the designated model, a UE may operate as an announcing UE and a monitoring UE simultaneously, or as a discoverer UE and a discoveree UE simultaneously.

The discovery procedure may include use of ProSe application codes and/or ProSe restricted codes depending on the use case, and a UE may be configured to participate in the discovery procedure only with certain codes. The discovery may involve communicating via PC5 reference point that is designated for the use by ProSe-enable UEs in control and user plane for direct discovery and ProSe direct communication. Accordingly, a UE may exchange also control information via the respective PC5 reference point.

Although there are various use cases depending on the model of the discovery and operation involving multiple PLMNs, in general terms, a UE may send a discovery request to a ProSe function in order to be authorized to access the discovery services and perform direct discovery. The discovery request may include various information to be used by the ProSe related network functions to determine the authorization of the UE. In particular, within various aspects provided herein, a discovery request may include an application layer ID (an application ID, an application layer user ID, or an application layer group ID) that may represent various aspects associated with a designated particular application. With the involvement of an application layer ID, UEs may discover each other in particular UEs that may include and operate particular applications. Based on a received discovery response as a response to a discovery request, a UE may start announcing, which may be based on a provided ProSe application code via authorized and configured radio resources in various PLMNs

When a ProSe function detects that a monitoring UE is in the vicinity of an announcing UE, the ProSe function may send to the monitoring UE information representing that there is an announcing UE within the vicinity of the monitoring UE. The information (e.g. an announcing alert) may include an application layer user identity (RPAUID) allocated by the ProSe application server (e.g. what the announcing UE is interested to announce), an application layer ID, a discovery entry ID, etc. Accordingly, the monitoring UE may determine that there is a further UE (i.e. an announcing UE) within the proximity. Similar signaling may also include for assisted discovery via a proximity alert performed by a ProSe function. The ProSe function may send a proximity alert based on a detection that a UE is within proximity into a further UE. The ProSe function(s) may accordingly send proximity alerts to UEs that are within the proximity, and the respective UEs may determine that there is a further UE within the proximity based on a received proximity alert.

In some aspects, the ProSe procedures may include a discovery procedure over exchange of PC5 messages over PC5 reference point between UEs. Based on the model of the discovery procedure, an announcing UE may send announcement messages via a PC5 communication channel, and a monitoring UE may detect announcing UEs in the vicinity based on received announcement messages or a discoverer UE may send solicitation messages to discoveree UEs and the discoverer UE may detect discoveree UEs in the vicinity based on received response messages.

The ProSe architecture may further allow UEs that are in the same vicinity to communicate with each other via ProSe direct communication procedures. A UE may perform a ProSe direct communication over an established connection via PC5 reference points between two UEs, or in a connectionless manner (e.g. one-to-many direct ProSe communications). A UE may have a designated layer-2 identifier which the UE may use to perform ProSe direct communications over an established connection. For this purpose, the UE may send to another UE that is within the vicinity a direct communication request over PC5 reference point to initiate the establishment of the connection with the another UE. In accordance with various aspects provided herein, the UE may store information associated with previously discovered and connected further UEs into a memory, and the UE may perform ProSe direct communication with the previously connected further UE based on the stored information in the memory.

FIG. 4 shows an exemplary illustration including a cell selection procedure in a cellular communication network. A UE may implement the cell selection procedure in order to find a suitable cell that the UE may camp on or connect to. It is to be noted herein, that a UE camped on a cell may include a case in which the UE may operate in an RRC_IDLE mode with the cell. In other words, once the UE selects a cell that is suitable based on a cell selection criterion, the cell may become a cell which the UE camps on. The UE may monitor system information, perform measurements on the serving cell and neighboring cells based on designated measurement profiles, and may select a better cell based on a re-selection criterion when the UE camps on a cell. Furthermore, the UE may connect to the cell which the UE had camped on, in which the UE may operate in an RRC_CONNECTED mode.

The cell selection procedure may receive an input of a selected PLMN Accordingly, a UE may perform a PLMN selection 401 before the cell selection procedure. Once the UE has selected a PLMN, the UE may check 402 whether there is cell information for the selected PLMN for cell selection stored in a memory. In case there is already stored cell knowledge, the UE may determine 403 whether the cell represented by the stored cell information is a suitable cell based on cell selection criteria. If the cell represented by the stored cell information is a suitable cell, the UE may select 404 the cell represented by the stored cell information.

If there is no stored cell knowledge or if the cell represented by the stored cell information is not a suitable cell, the UE may initiate 410 to perform an initial cell selection procedure. The initial cell selection procedure may represent that there is no prior knowledge for RF channels associated with the cellular radio communication technology (e.g. NR). Accordingly, the UE may scan 411 all RF channels associated with the corresponding cellular radio communication technology to find a suitable cell. On each frequency, the UE may only search for the strongest cell. In case the UE identifies a cell 412, the UE may check 403 whether 403 the identified cell is a suitable cell based on cell selection criteria. If an identified cell is a suitable cell, the UE may select 404 the identified cell.

In some examples, for each RF channel defined for the initial cell selection procedure, the UE may search for a synchronization signal, the UE may synchronize in time with downlink signals within the respective RF channel, the UE may receive system information (e.g. master information block (MIB)) transmitted for the cell, determine, as a first criterion, whether the cell is barred based on the MIB, acquire further system information (e.g. minimum system information (MSI)) associated with the cell via the MIB, determine, as a second criterion, whether the PLMN selected by the UE matches the PLMN ID provided by the cell in the MSI, determine, as a third criterion, whether cell selection measurements are within thresholds provided by the minimum system information, and thereby determine whether an identified cell is a suitable cell. In various examples provided in this disclosure, cell selection criteria, may include one, or a combination of, or all of the first criterion, the second criterion, and the third criterion.

As can be seen from the illustrated diagram, the initial cell selection procedure may involve scanning all RF channels, performing various checks, and additionally performing measurements for identified cells to determine whether an identified cell is a suitable cell, which may take some time and which may result in an overhead in radio resources. In other words, during the initial cell selection where the UE does not have prior knowledge of which RF channels are NR frequencies, UE may scan all RF channels in the NR bands according to its capabilities to find a suitable cell. Also on each frequency, the UE may need to search for the strongest cell till the suitable cell is found.

Additionally, UE can perform cell selection by leveraging stored information of frequencies/bands and optionally also information on cell parameters from previously received measurement control information (MCI) elements or from previously detected cells. However, if no suitable cell is found, the initial cell selection procedure by scanning all the NR frequencies may need to be performed. Generally, UEs belonging to same PLMN and which are in close proximity may attach to the same cell. Hence instead of performing redundant frequency scans, a UE can query these cell parameters from a further UE over an established direct wireless connection.

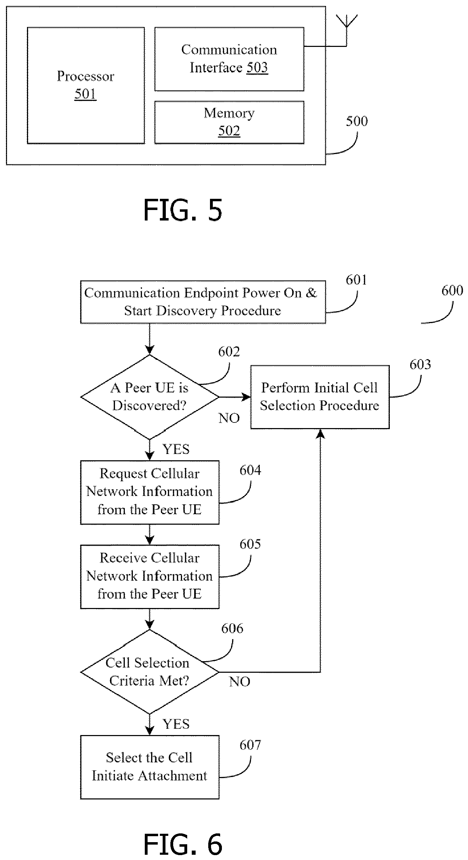

FIG. 5 shows an exemplary apparatus for a UE. The UE may be any type of communication device which is configured to operate in a cellular communication network according to various cellular communication technologies, such as LTE, 5G, 6G, etc. The skilled person would recognize that some aspects provided in this disclosure, in particular with respect to the apparatus for a UE may include a first set of aspects in which the UE may be the entity that receives the cellular network information from a further UE or a second set of aspects in which the UE may be entity that provides the cellular network information to a further UE. It is to be noted that an apparatus for a UE, namely the apparatus 500 may be configured to operate according to both sets of aspects, namely the apparatus 500 may be an apparatus that may cause a UE to provide cellular network information to a further UE, and it may also be an apparatus that may cause the same UE to receive cellular network information that is provided via inclusion of some aspects provided herein by a further UE. In other words, apparatus 500 may be configured to perform various aspects provided herein for the UE, and also for the further UE.

The apparatus 500 may include a processor 501. The processor 501 may include a central processing unit, a graphics processing unit, a hardware acceleration unit, a neuromorphic chip, and/or a controller. The processor 501 may be implemented in one processing unit, e.g. a system on chip (SOC), or an integrated system or chip. The processor 501 may include more than one processing unit configured to provide various aspects as mentioned herein. In various examples, the UE may include the apparatus 500, and the processor 501 may be one or more processors of the UE (e.g. application processor 212 and optionally protocol processor 210 and digital signal processor 208 as exemplarily provided with respect to FIG. 2).

The apparatus 500 may further include a memory 502 to store data. The memory 502 may store an operating system (not shown) including instructions configured to manage various operations of the processor 501, the memory 502, and the communication interface 503, and may further manage operations of the UE. The processor 501 and memory 502 (and also other various components of the apparatus) and other entities may be communicatively coupled over an internal interface to communicate with each other (e.g. a bus, wires, etc.).

The communication interface 503 may cause the apparatus 500 to communicate with further devices (e.g. other UEs) or with a network access node of a cellular network, and accordingly the processor 501 may manage the communications with other devices for the communication device 500. The communication interface 503 various components, as exemplarily provided in accordance with FIG. 2, such as antenna system 202, radio frequency (RF) transceiver 204, baseband modem 206 (including digital signal processor 208 and protocol controller 210). The communication interface 503 may include a separate application processor, and memory, or in various examples, the processor 501 and the memory 502 may provide functions of an application processor and memory for communication purposes for one or more radio communication protocols.

In this illustrative example, the communication interface 503 may be at least configured to perform radio communication protocol according to a cellular radio communication technology, such as LTE, 5G, etc. via a cellular connection with a network access node associated with a cell of the cellular network. The processor 501 may be configured to use ProSe services provided by the cellular network and perform ProSe-related functions. In various examples, the apparatus 500 may, via the communication interface 503, perform communication over peer-to-peer communication, and accordingly send or receive information (e.g. signals, messages, etc.). In various examples, the communication interface may include a first transceiver configured to perform cellular communications according to a cellular communication protocol, and a second transceiver configured to perform short-range wireless communications (e.g. Bluetooth, WLAN) according to another radio communication protocol, through which the apparatus may communicate with a further UE that is capable to communicate according to corresponding radio communication protocol via a peer-to-peer or point-to-point communications.

Accordingly, the processor 501 may establish a direct wireless connection with a further UE in order to communicate with the further UE. The processor 501 may establish the direct wireless connection as a ProSe connection over a PC5 reference point. The direct wireless connection may be a connection according to any type of radio communication technology through which the apparatus may communicate with the further UE. In various examples, the processor 501 may control the first transceiver of the communication interface 503 to establish a D2D connection between the UE and the further UE. In various examples, the processor 501 may control the second transceiver of the communication interface 503 to establish a peer to peer or a point to point connection between the UE and the further UE according to another radio communication technology, such as a short-range radio communication technology which may include Bluetooth, Wi-Fi Direct communication, or near-field communication (NFC) protocols.

In various examples, the further UE may be any UE that the processor 501 has obtained information representative of a presence of the further UE within a proximity to the UE, which may be a UE discovered via a discovery procedure, which is in a proximity of the UE. The proximity may be a predefined proximity, or a proximity in which the processor 501 may determine that the UE may establish the direct wireless connection. In various examples, the memory 502 may store connection information including information required to establish a direct wireless connection with the further UE according to the corresponding radio communication protocol. For example, the UE may have established a previous direct wireless connection with the further UE using the corresponding radio communication protocol, and the processor 501 may cause the memory 502 to store the connection information associated with the previously established connection.

In various examples, the processor 501 may obtain information representative of a further UE within the proximity via a discovery procedure. Accordingly, the processor 501 may be configured to discover UEs according to the above-mentioned ProSe discovery procedure. In particular, the processor 501 may also determine whether a discovered UE is configured to operate with a PLMN with which the UE is authorized to operate. Accordingly, the processor 501 may determine whether to establish a connection with a UE that is discovered based on ProSe discovery procedure based on the PLMN of discovered UEs. For example, in case the ProSe discovery procedure is a direct discovery without the involvement of radio access network, the UE may request their PLMN information from discovered UEs, and the UE may select the further UE based on obtained PLMN information from discovered UEs.

In various examples, in particular when the connection to be established with the further UE is a connection according to a radio communication protocol that is different from the cellular communication protocol, the processor 501 may further be configured to perform a discovery procedure of the respective radio communication protocol. In an example, in which the processor 501 is configured to establish the direct wireless connection with a further UE according to Bluetooth protocol, the processor 501 may further be configured to implement a Bluetooth discovery procedure involving sending and monitoring advertisement packets. In such cases, the processor 501 may be configured to encode PLMN request messages representative of a request of the PLMNs which discovered UEs have selected, and the processor 501 may select the UE among the discovered UEs based on obtained PLMN information representative of selected PLMNs by the discovered UEs.

In various examples, the processor 501 may further determine the radio communication protocol to be used to establish the direct wireless connection with the further UE based on information received with the discovery procedure. For example, the processor 501 may receive information configured to assist WLAN direct discovery or WLAN direct communication via through the ProSe discovery procedure. Based on received information configured to assist Wi-Fi direct discovery, the processor 501 may initiate a Wi-Fi direct discovery procedure to discover UEs within the proximity, or the processor 501 may establish a Wi-Fi direct connection to communicate with a discovered UE as the further UE.

Once the UE has established a direct wireless connection with the further UE, the UE and the further UE may exchange information via the direct wireless connection, so that either the UE or the further UE may configure cellular communications based on the exchanged information. There are various aspects provided in this disclosure, which are related to exchange of information between peer UEs that are within the proximity (e.g. the UE and the further UE), and accordingly the processor may encode and/or decode the exchanged information according to its role associated with the exchange of the information. In some aspects, the processor 501 may encode cellular network information as provided herein and in some aspects, the processor 501 may also decode received information from the further UE to obtain the cellular network information.

The processor 501 may encode a message representative of a request of cellular network information. The encoded message may further include information representative of particular cellular network information attributes. For example, the encoded message may indicate that a cell ID is requested for the cell which the further UE is connected to or which the further UE is camped on. Accordingly, the processor 501 may request any one of exemplary cell network information provided herein independently with the information representative of particular cellular network information attributes. The further UE may send a response message including the cellular network information, and the processor 501 may decode received response message to obtain the cellular network information. Based on the obtained cellular network information, the processor 501 may configure cellular communications and configure the communication interface 503.

For some aspects, received cellular network information from the further UE may include information required by the UE to select a cell and/or attach to the cell, such as the cell ID, the PLMN selected by the further UE, selectable PLMNs for the cell, frequency bands selected and/or used by the further UE, supported frequency bands by the cell, and radio access technologies used by the further UE or supported by the cell. The PLMN related information may include a PLMN identifier which may include a MCC and a MNC. In some examples, the cellular network information may further include service type information representative of the service type associated with the cell. Furthermore, the cellular network information may further include measurement information representative of cell selection measurements performed by the further UE. Based on these information, the processor 501 may determine whether to select the cell indicated by the cellular network information received from the further UE. In various examples, the processor 501 may further be configured to perform measurements based on the received cellular network information to obtain the cell selection measurements for the cell indicated by the cellular network information.

The processor 501 may, in particular, determine whether the cell indicated by the cellular network information received from the further UE via the established direct connection meet predefined cell selection criteria for the UE based on information included in the cellular network information. The processor 501 may decide if the cell signal quality is suitable based on the received measurement information. The processor 501 may further decide if the PLMN of the cell meets respective criteria for the UE. The processor 501 may further decide if the service type of the cell meets respective criteria for the UE. In other words, the processor 501 may determine whether the cell indicated by the cellular network information is a suitable cell according to cell selection criteria based on information included in the cellular network information.

The processor 501 may accordingly camp on the selected cell, that is selected based on the cellular network information received from the further UE. During the camping on the selected cell, the RRC mode of the UE may still include RRC_IDLE mode. The processor 501 may further initiate an RRC connection procedure via a random access procedure (e.g. contention based random access procedure) and an RRC connection establishment procedure, through which the UE may establish a signaling connection with the network access node of the selected cell, by which the UE may operate in an RRC_CONNECTED mode.

FIG. 6 shows an exemplary illustration of a cell selection procedure based on cellular network information received from a further UE within the proximity. A processor (e.g. the processor 501) of a UE may perform the procedure 600 and control further components/modules of the UE accordingly. The procedure 600 may include powering 601 on a communication endpoint used to perform communications and starting a discovery procedure with a powered communication endpoint. Considering the initial cell selection procedure may be performed when a UE is powered on, the processor may accordingly wait for the respective cellular communication endpoint to be powered on for further steps. Furthermore, in case the UE is configured to perform the discovery procedure based on a radio communication technology that is different than the cellular communication, such as via Bluetooth or via Wi-Fi Direct, the processor may further activate and wait for the respective communication endpoint to be used to discover UEs within the proximity to be powered on.

As provided in various examples of this disclosure, the discovery procedure may be a ProSe direct discovery procedure via a use of cellular communication signals or radio communication signals that are provisioned by the ProSe for discovery such as Wi-Fi Direct discovery, but this should not be limiting. The processor may be configured to discover other communication devices within the proximity via a use of a discovery procedure according to a further short-range wireless communication technology, such as Bluetooth. In a discovery procedure without the support of the ProSe, the UE and discovered communication devices may further exchange information for determination of whether there is a UE among discovered communication devices. In various examples, the processor may perform the ProSe direct discovery procedure based on information stored in a memory of the UE, which the information is representative of previously discovered UEs within the vicinity. Furthermore, the ProSe direct discovery procedure may include broadcasting via PC5 reference point.

In case 602 a peer UE is not discovered; the processor may perform 603 (or cause the UE to perform) an initial cell selection procedure including scanning predefined RF channels for cell selection procedure. Some aspects associated with the initial cell selection procedure are provided in accordance with FIG. 4. In case 602 a peer UE is discovered; the processor may establish a direct wireless connection with the discovered peer UE and encode a request message for UE's request 604 of cellular network information from the discovered peer UE. The request message may include information representing that requested cellular network information is for a cell selection procedure, or alternatively may include information indicating attributes required for selecting a cell, such as an information representing that a cellular network information is requested to include cell ID, PLMN ID (exemplarily including MNC and MCC), cell selection measurements, frequency band, etc.

Based on the request message, the discovered peer UE may encode cellular network information to be transmitted to the UE. The cellular network information encoded by the discovered peer UE may include, for the cell which the discovered UE is camped on or connected to, the cell ID of the cell, PLMN information of the discovered peer UE, PLMN ID of the cell, frequency band used by the discovered peer UE to communicate within the cell, the latest signal measurements performed or obtained by the discovered peer UE for the cell, etc. The discovered peer UE may send the encoded cellular network information with a wireless transmission over the established direct wireless connection to the UE.

Accordingly, the UE may receive the wireless communication signals over the established direct wireless connection from the discovered peer UE, and the processor may decode received wireless communication signals to obtain 605 the cellular network information. Based on the obtained cellular network information, the processor may determine 606 whether predefined cell selection criteria is met for the cell of which the information is received via the cellular network information based on the information included in the cellular network information. If the cell selection criteria is not met, the processor may perform 603 (or cause the UE to perform) the initial cell selection procedure. If the cell selection criteria is met, the processor may select 607 the cell and initiate an attachment procedure for the selected cell.

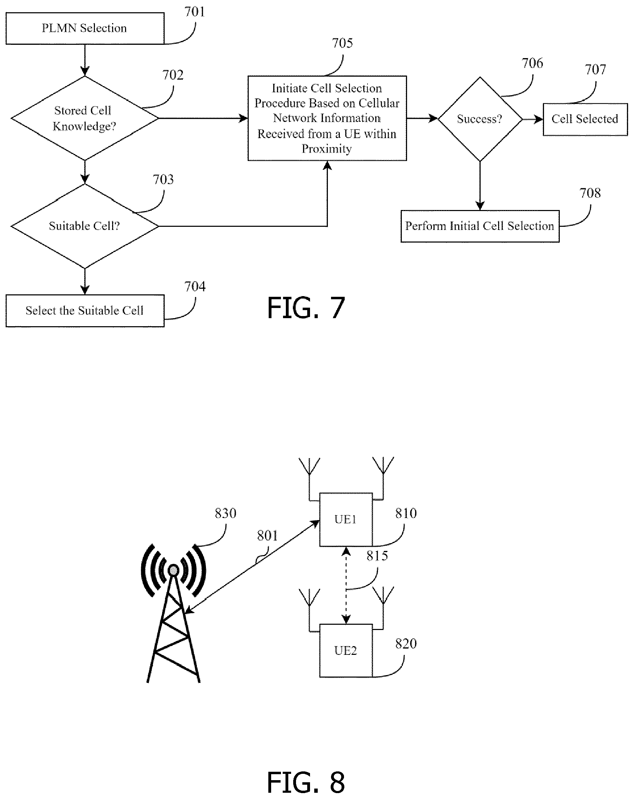

FIG. 7 shows an exemplary illustration including a cell selection procedure that a UE may perform in accordance with various aspects provided herein. The similarity with the aspects provided according to FIG. 4 is to be recognized and the procedure 700 may include various aspects disclosed for the cell selection procedure provided in accordance with FIG. 4. An apparatus for a UE (e.g. the apparatus 500) may implement the procedure 700.

A UE may implement the procedure 700 in order to find a suitable cell that the UE may camp on or connect to. It is to be noted herein, that a UE camped on a cell may include a case in which the UE may operate in an RRC_IDLE mode with the cell. In other words, once the UE selects a cell that is suitable based on a cell selection criterion, the cell may become a cell which the UE camps on. The UE may monitor system information, perform measurements on the serving cell and neighboring cells based on designated measurement profiles, and may select a better cell based on a re-selection criterion when the UE camps on a cell. Furthermore, the UE may connect to the cell which the UE had camped on, in which the UE may operate in an RRC_CONNECTED mode.

The cell selection procedure may receive an input of a selected PLMN Accordingly, a UE may perform a PLMN selection 701. Once the UE has selected a PLMN, the UE may check 702 whether there is cell information for the selected PLMN for cell selection stored in a memory. In case there is already stored cell knowledge, the UE may determine 703 whether the cell represented by the stored cell information is a suitable cell based on cell selection criteria. If the cell represented by the stored cell information is a suitable cell, the UE may select 704 the cell represented by the stored cell information.

If 702 there is no stored cell knowledge or if 703 the cell represented by the stored cell information is not a suitable cell, the UE may initiate 705 a cell selection procedure based on cellular network information received from a further UE within the proximity (e.g. the procedure 600). Accordingly, the UE may initiate a discovery procedure to discover further UEs within proximity, with which the UE may establish direct wireless connections. The UE may further establish a direct wireless connection. The UE may further receive cellular network information from the further UE, and the received cellular network information may include information based on which the UE may select 707 a cell, and initiate an RRC establishment procedure. In case 706 the initiated cell selection procedure based on cellular network information received from the further UE is not successful, the UE may perform the initial cell selection procedure of which some of its details are provided in this disclosure.

The initial cell selection procedure may represent that there is no prior knowledge for RF channels associated with the cellular radio communication technology (e.g. NR). Accordingly, the UE may scan all RF channels associated with the corresponding cellular radio communication technology to find a suitable cell. On each frequency, the UE may only search for the strongest cell. In case the UE identifies a cell, the UE may check whether the identified cell is a suitable cell based on cell selection criteria. If an identified cell is a suitable cell, the UE may select the identified cell.

A processor of the apparatus may determine to perform the initial cell selection procedure 708 (e.g. determine 706 that the cell selection procedure based on cellular network information received from a further UE within the proximity is not successful) during the cell selection procedure based on cellular network information received from a further UE, in case the UE is unable to discover other UEs for a predefined period of time. Alternatively, or additionally, the processor may determine to perform the initial cell selection procedure 708 in case the UE is unable to discover other UEs with which the UE can establish direct wireless connections. Alternatively, or additionally, the processor may determine to perform the initial cell selection procedure 708, in case the UE is unable to receive cellular network information over the established direct wireless connection for a predefined period of time.

In some examples, for each RF channel defined for the initial cell selection procedure, the UE may search for a synchronization signal, the UE may synchronize in time with downlink signals within the respective RF channel, the UE may receive system information (e.g. master information block (MIB)) transmitted for the cell, determine, as a first criterion, whether the cell is barred based on the MIB, acquire further system information (e.g. minimum system information (MSI)) associated with the cell via the MIB, determine, as a second criterion, whether the PLMN selected by the UE matches the PLMN ID provided by the cell in the MSI, determine, as a third criterion, whether cell selection measurements are within thresholds provided by the minimum system information, and thereby determine whether an identified cell is a suitable cell. In various examples provided in this disclosure, cell selection criteria, may include one, or a combination of, or all of the first criterion, the second criterion, and the third criterion.

It is to be noted that the procedure 700 is illustrated only as an example, and the UE may initiate the cell selection procedure based on cellular network information received from a further UE within the proximity as illustrated in 705 at different steps. For example, the UE may initiate the cell selection procedure based on cellular network information received from a further UE within the proximity before the PLMN selection as illustrated in 701. Based on received cellular network information, the apparatus may cause the UE to select a PLMN. In another example, the UE may initiate the cell selection procedure based on cellular network information received from a further UE within the proximity after the PLMN selection as illustrated in 701 but before checking stored cell knowledge as illustrated in 702.

Referring back to FIG. 5, once a cell has been selected, the UE may be considered as it is camped on a cell which may include the case in which the UE is in an RRC_IDLE mode. Furthermore, the UE may establish an RRC connection with the network access node of the selected cell and start operating in an RRC_CONNECTED mode. For various aspects provided herein the processor 501 may have selected the cell based on cellular network information received from a further UE, or the processor 501 may have selected the cell based on stored cell knowledge in the memory 502, or based on an initial cell selection procedure. Once the UE has selected a cell, the processor 501 may encode cellular network information associated with the cell based on radio communication operations between the UE and the network access node of the cell. In various aspects, the cellular network information may include cell selection information that a further UE may use to select the cell. In some aspects, the cellular network information may include cell reselection information representative of a cell reselection decision by the UE.

After camping on the cell, the UE may monitor system information and perform measurements on the camped cell and neighboring cell based on designated measurement rules. A UE may, based on performed measurements, select another cell that is different from the camped cell based on designated reselection criteria. This procedure may be referred to as a cell reselection. The measurement rules and reselection criteria may be based on information received from respective cells. The processor 501 may be configured to perform cell reselection measurements. For this purpose, the processor 501 may control the communication interface 503 to receive cellular communication signals transmitted by network access nodes of neighboring cells to perform measurements. The measurements may include, similar to measurements associated with a cell selection procedure, RSRPs or RSRQs based on received cellular communication signals in respective RF channels.

For a cell reselection, a UE may, in particular when the UE is in RRC_IDLE mode (or sometimes in RRC_INACTIVE mode), perform measurements in certain intervals (e.g. at every discontinuous reception (DRX) cycle) perform measurements to obtain a signal quality level (i.e. channel measurement) for the serving cell (i.e. the cell that the UE is camped on). In case the obtained channel measurement is above a designated threshold value, the UE may stay camped on the same cell. In case the obtained channel measurement is below the designated threshold value, the UE may trigger a cell reselection procedure. The cell reselection procedure may include an intra frequency cell reselection based on intra-frequency measurements, inter frequency cell reselection based on inter-frequency measurements, reselection to a higher priority (i.e. reselection to a higher priority RF frequency), or a reselection to a lower priority (i.e. reselection to a lower priority RF frequency). Based on the performed measurements associated RF channels of the serving cell and the neighboring cells, the UE may determine a cell reselection result representative of whether to perform a cell reselection (reselect a cell), or not, based on designated cell reselection criteria.

In accordance with various aspects provided herein, the processor 501 may obtain at least one channel measurement representative of a quality associated with a cellular communication channel, which may include the measurements associated with the cell which the UE is camped on, and/or which may include the measurements associated with neighboring cells. The measurements may include RSRPs and/or RSRQs, or any type of information that may represent a signal quality received from the cellular communication channel of a cell. Based on the obtained channel measurement, or measurements, the processor 501 may determine a cell reselection result representative of whether to perform a cell reselection or not. Furthermore, the processor 501 may encode cellular network information including information representative of the determined cell reselection result for a transmission to a further UE that is in a proximity of the UE over an established direct wireless connection.

In some aspects, the UE may already have an established direct wireless connection with the further UE. In various aspects, the processor 501 may perform a discovery to detect further UEs within the proximity, establish direct wireless connections to one or more further UEs as exemplarily provided in this disclosure, in particular with respect to cell selection procedures.

The processor 501 may encode the cellular network information including the information representative of the determined cell reselection result (i.e. cell reselection information), in case the determined cell reselection result is representative of a cell reselection decision, namely in case the cell reselection result is determined to perform a cell reselection. In various examples, the cellular network information may further include information that is representative of the cell to be reselected. Accordingly, the cellular network information may further include information representative of the cell ID of the new cell, PLMN information of the UE, PLMN ID of the new cell, frequency band to be used by the UE to communicate within the new cell, the latest signal measurements performed or obtained by the UE for the new cell, etc., so that the further UE may reselect the new cell that has been reselected by the UE. In some examples, the cellular network information may only include information representative of the determined reselection result, and the further UE may initiate a cell reselection procedure according to known cell reselection mechanism in response to received cellular network information that is representative of that the UE had determined a cell reselection.

In some aspects, the cell reselection information may further include measurement information representative of channel measurements obtained by the processor 501, which are performed by the UE. Accordingly, the further UE may determine whether to reselect the cell that the cell reselection information represents, based on the measurement information received from the UE.

In various examples, the processor 501 may determine to encode the cellular network information including cell reselection information based on PLMN information previously received from the further UE, which may be stored in the memory 502, that is representative of the selected PLMN of the further UE. For example, in case the processor 501 determines that a PLMN ID of the reselected cell is not compliant with the selected PLMN of the further UE, the processor 501 may not encode the cellular network information including the cell reselection information.

Furthermore, the memory 502 may store subscription information representative of if each further UE (e.g. of further UEs that have established direct wireless connections with the UE, or of further UEs that have had established direct wireless connection with the UEs in a past session, etc.) intend to receive cellular network information. The processor 501 may determine to encode the cellular network information for each further UE based on the subscription information stored in the memory 502.

The skilled person would recognize that the above-mentioned methods may include obtaining information about further UEs (e.g. PLMN information, subscription information). The processor 501 may, after, optionally, a discovery procedure and establishing direct wireless connection with further UEs, request information from further UEs to perform respective configurations. In this particular example, the processor 501 may encode information representative of a request of PLMN information and of subscription information for a transmission to the further UEs. Based on responses received from the further UEs, the processor 501 may cause the memory 502 to store relevant information associated for each further UE having an established direct wireless connection with the UE, such as PLMN information received from each further UE and subscription information associated with each further UE.

FIG. 8 shows an illustration associated with an exemplary interoperation between UEs, in accordance with various aspects provided herein. The illustration includes a UE1 810 and a UE2 820, each including an apparatus (e.g. the apparatus 500) configured to perform direct wireless communication with another UE within the proximity. In this illustrative example, UE1 810 is connected to a network access node 830 of a cell over an established cellular connection 801. The UE1 810 could have been camped on the cell as well. The UE1 810 may also be configured to communicate with the UE2 820 over an established direct wireless connection 815. The UE2 820 may also be camped on the same cell. In various examples, either one of the UE1 810 or the UE2 820 may have selected the cell based on cellular network information received from a previously camped one of the UE1 810 or the LTE2 820.

The UE2 820 may perform cell reselection measurements, and based on the performed cell reselection measurements the UE2 820 may determine to select another cell according to a cell reselection procedure. After the determination to select another cell, the UE2 820 may send cellular network information including cell reselection information representative of the determination to select another cell to UE1 810. The cell reselection information may further include cell parameters associated with the another cell, or cell reselection measurements performed by the UE2 820.

As provided in various examples, the UE2 820 may send the cell reselection information in response to the determination to select another cell to the UE1 810. In various examples, the UE2 820 may periodically send cell reselection information including one or more latest cell reselection determination results. In various examples, the UE1 810 may request cellular network information including cell reselection information from the UE2 820. The UE 810 may request cellular network information including cell reselection information periodically, or aperiodically based on a reselection event. For example, the UE1 810 may perform measurements for the cell (i.e. the serving cell), and the UE1 810 may determine to send a request to the UE2 820 requesting cellular network information including cell reselection information based on the performed measurements (e.g. measured signal quality is below the designated threshold).

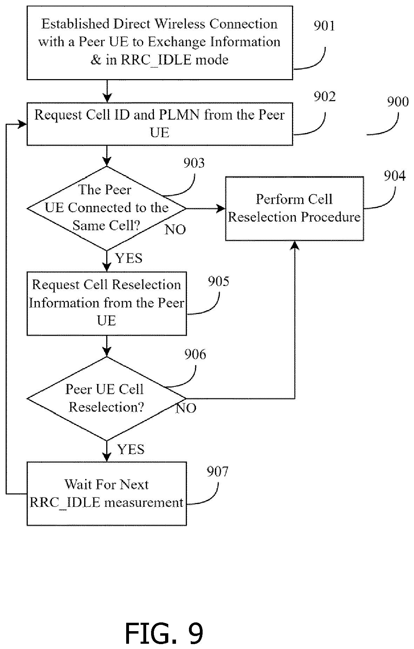

FIG. 9 shows an exemplary illustration of a cell reselection procedure including a request of cell reselection information from a further UE. A processor (e.g. the processor 501) of a UE (e.g. the UE1) may perform the procedure 900 and control further components/modules of the UE accordingly. The procedure 900 may include being in a state 901 in which the UE has established a direct wireless connection with the further UE to exchange information (e.g. cellular network information) and the UE may be in an RRC_lDLE mode, which may be based on various aspects provided in this disclosure, in particular being registered for ProSe and performing a ProSe discovery procedure. The established direct wireless connection may be a ProSe direct connection, a D2D connection, or a connection based on another radio communication protocol, such as Bluetooth, WLAN, Wi-Fi Direct, NFC, WPAN, etc.

In some examples, the UE may have scheduled RRC_IDLE measurements associated with cell reselection procedure. The processor may encode information for a transmission to the further UE via the direct wireless communication to request 902 cellular network information including an identifier of the cell (e.g. cell ID) on which the further UE is camped on or connected to, and the selected PLMN of the further UE. Based on received cellular network information from the UE, in response to the request, the processor may determine 903 whether the further UE is connected to the same cell. In case the further UE is not connected to the same cell, the processor may initiate performing a cell reselection procedure 904 including performing measurements for the serving cell and for neighboring cells.

In case the further UE is connected to the same cell, the processor may encode further request of cellular network information including cell reselection information to request 905 cell reselection information from the further UE. Based on received further cellular network information including cell reselection information, in response to the further request, the processor determines 906 if the further UE is determined to stay on the same cell, or to reselect a cell. In case received cell reselection information represents that the further UE has selected another cell, the processor may also initiate to perform 904 the cell reselection procedure. In case received cell reselection information includes cell parameters (e.g. frequency band information, PLMN ID, Cell ID) of the selected another cell, the processor may perform the cell reselection information based on received cell parameters. In case received cell reselection information represents that the further UE has stayed on the same cell, the processor may wait 907 for next RRC_lDLE measurement that is scheduled. The processor may also schedule requesting cell ID and PLMN from the further UE for a further instance of time.

Referring back to FIG. 5, the processor 501 may encode any information associated with a cell that is selected by the UE as cellular network information, and in line with the encoding, the processor 501 may also obtain information associated with a cell that is selected by the further UE from the further UE provided as cellular network information.

For example, the processor 501 may encode information of available radio access technologies (RATs) which the UE has detected for the selected cell as cellular network information, so that a processor of the further UE may obtain the available RAT associated with the selected cell and configure cellular communication based on the RAT supported by the selected cell. Furthermore, the processor 501 may encode information representative of other RATs that the UE has detected in the radio environment. For example, the UE may indicate to the further UE other RATs within the proximity, so that the further UE may perform various actions based on the indicated RATs within the proximity. Similarly, the processor 501 may obtain information associated with other RATs detected by the further UE, and the processor 501 may establish, or attempt to establish connections, which may include further direct wireless connections, with other UEs based on the detected RATs by the further UE.

In some aspects, the processor 501 may encode cellular network information, for a transmission to the further UE, including information representative of a tracking area information (e.g. tracking area code, tracking area entity) associated with the UE. In some aspects, the processor may encode cellular network information, for a transmission to the further UE, including information representative of location area information (e.g. location area code, location area identity) associated with the UE that is received from the cell.

In some aspects, the processor 501 may encode cellular network information, for a transmission to the further UE, including beamforming information representing a selected beam direction by the UE to perform cellular communications. Similarly, the processor 501 may obtain the beamforming information representing a selected beam direction by the UE by the further UE over the established direct wireless connection, and the processor 501 may configure the communication interface 503 to select the beam direction represented by the obtained beamforming information.

In some aspects, the UE may receive a common message decoded from received cellular communication signals that is addressed to a group of UEs (i.e. a UE group), which may include common control channel (CCCH) messages. In some examples, the processor 501 may encode cellular network information, for a transmission to the further UE via the direct wireless connection, including the common message received via the cellular connection. The encoded cellular network information may include an identifier for the UE group (i.e. a group ID) to which the common message is addressed to. The processor 501 may determine whether the further UE belongs to the UE group that a received common message is addressed to, and the processor 501 may accordingly forward the received common message to the further UE via the established direct wireless connection. Similarly, the processor 501 may obtain a group message, which the further UE has encoded in the cellular network information, based on received cellular network information via the established direct wireless connection. In some examples, the common message may include an identifier for the UE group, and the processor 501 may determine whether the UE belongs to the UE group based on the received identifier for the UE group. Accordingly, the processor 501 may configure communication interface 503 based on the received common message from the further UE via the established direct wireless connection to configure cellular communications based on the received common message.

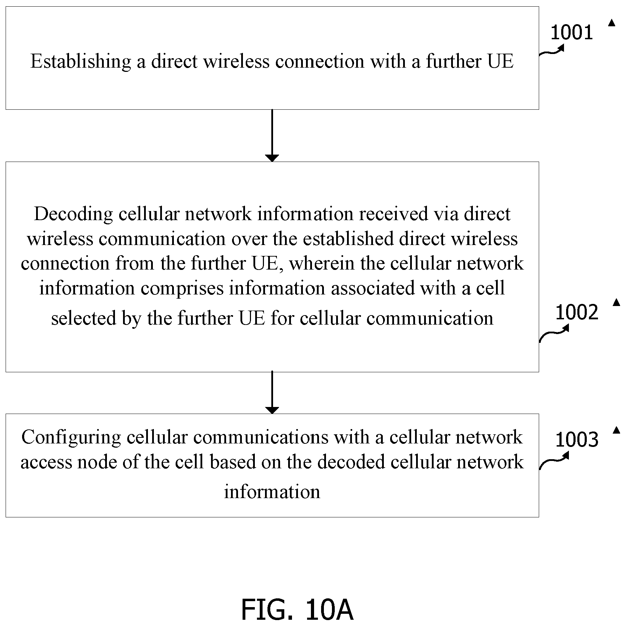

FIG. 10A shows an example of a method for a UE. The method may include establishing 1001 a direct wireless connection with a further UE; decoding 1002 cellular network information received via direct ProSe communication over the established direct wireless connection from the further UE, wherein the cellular network information comprises information associated with a cell selected by the further UE for cellular communication, and configuring 1003 cellular communications with a cellular network access node of the cell based on the decoded cellular network information.

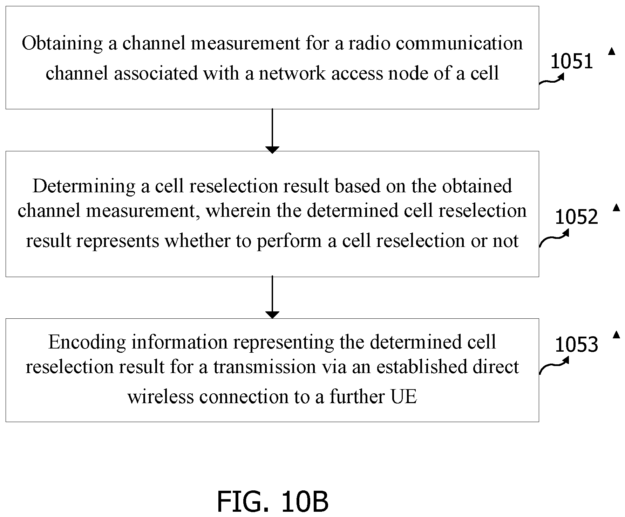

FIG. 10B shows an example of a method for a UE. The method may include obtaining 1051 a channel measurement for a radio communication channel associated with a network access node of a cell, determining 1052 a cell reselection result based on the obtained channel measurement, wherein the determined cell reselection result represents whether to perform a cell reselection or not, encoding 1053 information representing the determined cell reselection result for a transmission via an established direct wireless connection to a further UE.

Modern digital communication includes exchange of information between corresponding layers of a protocol stack between communicating devices, and particularly when the data exchange is for user data, exchange of data between applications that are configured to process and use user data at the application layer of the protocol stack. Considering modularization of data communication intended for implementation of protocol stacks, applications sending and receiving data at the application layer may not have particular dependency with respect to how other layers of the protocol stack are used to transfer data, other than some quality of service (QoS) requirements, constraints, and conditions.

Various communication devices may use a mobile communication network in which various types of information are exchanged. The amount of information transferred over a communication network may increase to certain levels, and in some examples, conditions of communication, particularly radio communication, may further introduce losses, which may cause delays in data transfer. Especially, when user of a communication device expects a reliable communication with less latency from certain applications, such delays may affect the experience of the user.

Within this disclosure, such applications through which the user expects a reliable communication with latency may be referred to as real-time applications. These applications may be for various purposes. One particular example may include gaming applications. In multiplayer gaming, less latency is extensively expected in order to provide action/reaction time within the game. Other examples may include teleconferencing applications, online-meeting applications, videoconferencing applications, applications associated with remote control of sensitive devices, such as medical devices, surgery devices, vehicles, etc.

In some examples, network access nodes, or other entities in data network, may hold data packets waiting to be transferred, until earlier packets, which may not have the same constraints, or until other packets which have some kind of priority over held packets are transferred. Scheduling network traffic while maintaining QoS constraints for all transferred packets at each network hop within the mobile communication network may become challenging.

With recent developments in an implementation of mobile communication networks, a mobile communication network includes a physical network infrastructure configured to provide various services via virtualized and independent logical networks through use of various network functions that are multiplexable based on a respective use scenario with an intention to provide a better network flexibility. Using software defined networks and network function virtualization technologies, the mobile communication network may include the network functions to establish logical networks to meet specific needs of service consumers/service providers to perform communication.

Within this context, entities may perform communication within the mobile communication network via use of network slices, in which each network slice may define an independent and logical end-to-end network in a flexible manner, by which the data transports based on various network parameters that may be specific to the use case or the communicating entities (e.g. UE). Network entities between the end-to-end network may configure themselves based on the network parameters associated with the respective network slice through which, for example, a network entity at one end receives a particular service. Each transmitting entity may be associated with one or more network slices. For example, a provisioning entity within the mobile communication network (e.g. Unified Data Management, UDM in 5G/NR) may assign one or more network slices to a UE in response to a request received from the UE, and a UE may request one or more network slices according to various type of requirements in terms of services used by the UE.

For this purpose, requested and/or granted network slices of a UE may be represented by a network slice identifier (e.g. a single network slice selection assistance information (S-NSSAI), or a network slice election assistance information (NSSAI)) representing the network slice associated with the transmitting entity or the respective transmission. In some examples, an attribute of a network slice may include a slice/service type (e.g. a value representing whether a respective service associated with the transmission is enhanced Mobile Broadband (eMBB), ultra reliable low latency communications (URLLC), or massive machine type communications (mMTC) service). In some examples, an attribute may include a slice differentiator representative of information to provide indication for the respective service. In some examples, an attribute may also include a QoS requirement or a QoS preference associated with the respective network slice. By implementation of using different slices provisioned by the mobile communication network, a UE may pursue, and opt for, a communication service with a reduced latency, such as URLLC.

In some aspects provided herein, a UE may offload data communication associated with application data of an application executed by a processor of the UE, to a network slice, in which the UE expects a reduced latency. In various aspects, the UE may offload such a data communication to an established direct wireless connection with a further UE, which is the addressee of the application data (i.e. destination address), when the UE and the further UE are within the same vicinity, in that an established direct wireless connection may be maintained. Such communication by which the delivery of application data is intended based on desired QoS (e.g. latency) may be referred to as a latency resilient communication within this disclosure. The UE may further perform communications for application data of other applications in a usual manner.

Referring back to FIG. 3, the UE1 310 may have various applications executed by the processor of the UE1 310, which each application may exchange data (i.e. application data) with other communication devices via the mobile communication network at an application layer of one or more corresponding protocol stacks. In particular for user data at a user plane, each application data may pass through further layers of the respective protocol stack (e.g. transport layer, network layer, link layer, and physical layer). In transmission, UE1 310 transmits radio communication signals carrying the application data to the network access node 330 over the established cellular connection. The network access node 330 may send packets including the application data to a designated gateway (e.g. a serving gateway (SGW), packet gateway (PGW)) that is configured to route data packets between the UE1 310 and the addressee of the data packets. In reception, the designated gateway may route data packets sent by a sender communication device, to the network access node 330, and UE1 310 receives radio communication signals carrying application data sent by the sender communication device from the network access node 330. In these examples, a session (i.e. a logical link) may have been established between the UE1 310 and the addressee or sender communication device. In various examples, the UE1 310 may have established a group session with a plurality of UEs including the UE2 320 to exchange data simultaneously with the plurality of UEs. Various aspects provided herein may be provided for transferring application data to a plurality of UEs in the same manner.

An application executed by UE1 310 and an application executed by UE2 320 may cause the UE1 310 and the UE2 320 to communicate over an established session through the mobile communication network. In such an example, UE1 310 and/or UE2 320 may determine to offload data communication to send application data to UE2 320 and/or UE1 310 respectively via another physical link (i.e. connection), such as the established direct wireless connection 315. As provided within this disclosure, UE1 310 and/or UE2 320 may offload data communication based on a determined proximity result representing whether the UE2 320 and/or UE1 310 respectively is within a proximity to communicate via a direct wireless connection. Corresponding UE may determine the proximity result by using the ProSe.

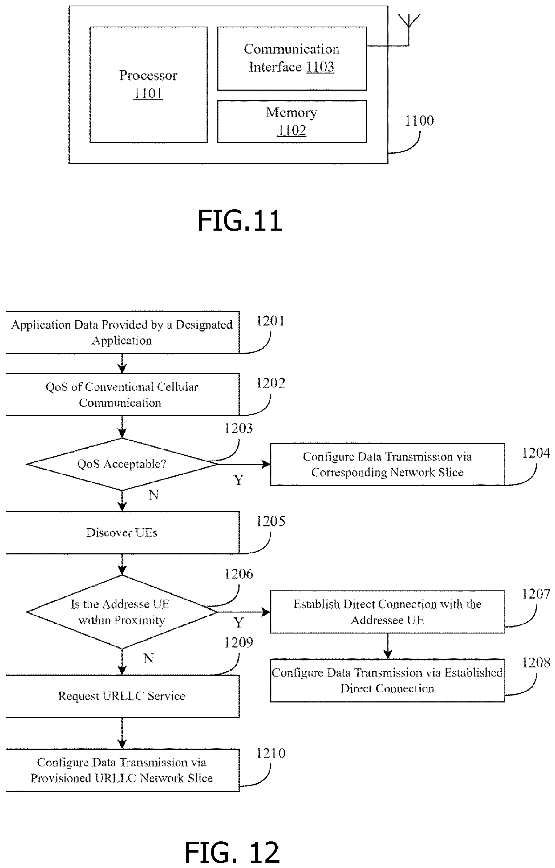

FIG. 11 shows an exemplary apparatus for a UE. The UE may be any type of communication device which is configured to operate in a cellular communication network according to various cellular communication technologies, such as LTE, 5G, 6G, etc. It is to be noted that the apparatus 1100 may be an apparatus for each UE of a plurality of UEs (e.g. UE1 310 and UE2 320) that are configured to exchange application data with each other. Furthermore, the skilled person would recognize that aspects explained herein for encoding/transmission may also represent aspects associated with decoding/reception. Moreover, the apparatus 1100 may include various aspects provided herein for an apparatus of a UE, such as the apparatus 500.

The apparatus 1100 may include a processor 1101. The processor 1101 may include a central processing unit, a graphics processing unit, a hardware acceleration unit, a neuromorphic chip, and/or a controller. The processor 1101 may be implemented in one processing unit, e.g. a system on chip (SOC), or an integrated system or chip. The processor 1101 may include more than one processing unit configured to provide various aspects as mentioned herein. In various examples, the UE may include the apparatus 1100, and the processor 1101 may be one or more processors of the UE (e.g. application processor 212 and optionally protocol processor 210 and digital signal processor 208 as exemplarily provided with respect to FIG. 2).

The apparatus 1100 may further include a memory 1102 to store data. The memory 1102 may store an operating system (not shown) including instructions configured to manage various operations of the processor 1101, the memory 1102, and the communication interface 1103, and may further manage operations of the UE. In particular, the memory 1102 may include instructions of applications executed by the processor 1101, including instructions of real-time applications, or non-real time applications. The processor 1101 may execute the applications with an involvement of an interface provided by the operating system between the applications and the hardware components of the apparatus 1100. An application may refer to a software program having a designated purpose, of which application instructions are stored in the memory 1102. The processor 1101 may access (e.g. fetch) instructions stored in the memory 1102, and execute the instructions accordingly to execute an application. The processor 1101 and memory 1102 (and also other various components of the apparatus) and other entities may be communicatively coupled over an internal interface to communicate with each other (e.g. a bus, wires, etc.).

The communication interface 1103 may cause the apparatus 1100 to communicate with further devices (e.g. other UEs) or with a network access node of a cellular network, and accordingly the processor 1101 may manage the communications with other devices for the communication device 1100. The communication interface 1103 various components, as exemplarily provided in accordance with FIG. 2, such as antenna system 202, radio frequency (RF) transceiver 204, baseband modem 206 (including digital signal processor 208 and protocol controller 210). The communication interface 1103 may include a separate application processor, and memory, or in various examples, the processor 1101 and the memory 1102 may provide functions of an application processor and memory for communication purposes for one or more radio communication protocols.

In this illustrative example, the communication interface 1103 may be at least configured to perform radio communication protocol according to a cellular radio communication technology, such as LTE, 5G, etc. via a cellular connection with a network access node associated with a cell of the cellular network. The processor 1101 may be configured to use ProSe services provided by the cellular network and perform ProSe-related functions. In various examples, the apparatus 1100 may, via the communication interface 1103, perform communication over peer-to-peer communication, and accordingly send or receive information (e.g. signals, messages, etc.). In this example, an established direct wireless connection may include an established D2D connection via a transceiver that is configured to perform cellular communication.

In various examples, the communication interface 1103 may include a first transceiver configured to perform cellular communications according to a cellular communication protocol, and a second transceiver configured to perform short-range wireless communications (e.g. Bluetooth, WLAN) according to another radio communication protocol, through which the apparatus may communicate with a further UE that is capable to communicate according to corresponding radio communication protocol via a peer-to-peer or point-to-point communications. In such an example, an established direct wireless connection may also include an established connection according to respective another radio communication protocol.

The processor 1101 may establish a direct wireless connection with a further UE in order to communicate with the further UE. In some examples, the processor 1101 may establish the direct wireless connection as a ProSe connection over a PC5 reference point. The direct wireless connection may be a connection according to any type of radio communication technology through which the apparatus may communicate with the further UE, but in particular it may be a D2D connection over a cellular communication interface. In various examples, the processor 1101 may control the first transceiver of the communication interface 1103 to establish a D2D connection between the UE and the further UE. In various examples, the processor 1101 may control the second transceiver of the communication interface 1103 to establish a peer to peer or a point to point connection between the UE and the further UE according to another radio communication technology, such as a short-range radio communication technology which may include Bluetooth, Wi-Fi Direct communication, or near-field communication (NFC) protocols.

In various examples, the further UE may be any UE that the processor 1101 has determined a proximity result that is representative of that the further UE is within the proximity of the UE. The processor 1101 may accordingly obtain information representative of a presence of the further UE within a proximity to the UE, which may be a UE discovered via a discovery procedure, which is in a proximity of the UE. The proximity may be a predefined proximity, or a proximity in which the processor 1101 may determine that the UE may establish the direct wireless connection. For example, the obtained information representing that the further UE is within the proximity of the UE may be a ProSe message received via the ProSe. The ProSe message may include a proximity alert or an announcing alert, which may represent that the further UE is within the proximity.

In various examples, the memory 1102 may store connection information including information required to establish a direct wireless connection with the further UE according to the corresponding radio communication protocol. For example, the UE may have established a previous direct wireless connection with the further UE using the corresponding radio communication protocol, and the processor 1101 may cause the memory 1102 to store the connection information associated with the previously established connection. Once the connection is established between the UE and the further UE, the processor 1101 may determine the proximity result associated with the further UE, which the proximity result may represent that the further UE is within the proximity of the direct wireless communication.

In various examples, the processor 1101 may obtain information representative of a further UE within the proximity via a discovery procedure. Accordingly, the processor 1101 may be configured to discover UEs according to the above-mentioned ProSe discovery procedure. In various examples, in particular when the connection to be established with the further UE is a connection according to a radio communication protocol that is different from the cellular communication protocol, the processor 1101 may further be configured to perform a discovery procedure of the respective radio communication protocol.

In various examples, the processor 1101 may further determine the radio communication protocol to be used to establish the direct wireless connection with the further UE based on information received with the discovery procedure. For example, the processor 1101 may receive information configured to assist WLAN direct discovery or WLAN direct communication via through the ProSe discovery procedure. Based on received information configured to assist Wi-Fi direct discovery, the processor 1101 may initiate a Wi-Fi direct discovery procedure to discover UEs within the proximity, or the processor 1101 may establish a Wi-Fi direct connection to communicate with a discovered UE as the further UE.

The processor 1101 may configure transmissions selectively via an established cellular connection with the network access node, and one or more established direct wireless connections. The transmissions may include transmissions to be performed, which the transmissions include data transmissions carrying application data of applications executed by the processor 1101. Through this operation, the processor 1101 may selectively configure data transmission of a particular application via a cellular connection (i.e. an established cellular connection in RRC_CONNECTED mode with a cell), in which the data is transmitted over a network access node and a designated gateway through data communication network to a further UE that is the addressee of the application data, or over a direct wireless connection directly to the further UE.

The processor 1101 may perform selective configuration of transmissions for one or more particular applications executed by the processor and, which the applications are configured to provide application data from an application layer for a protocol stack. The processor 1101 may accordingly determine whether an obtained application data is for a selective configuration or not based on the application that provides the application data. For example, the memory 1102 may store application identifiers for the applications for selective configurations (e.g. identifiers of real-time applications). Furthermore, selective configuration of transmissions may include selecting a method of transmission for the application data based on the application that provides the application data.

In various examples, the processor 1101 may obtain information associated with the addressee of data of application data from data packets including application data. Obtained data, which includes application data, may be configured to be sent to the further UE. The processor 1101 may obtain application data that is configured to be sent to a destination address from a layer between the application layer and at least one of the transport layer, or network layer, or link layer. For example, the processor 1101 may obtain internet protocol (IP) packets including the application data and obtain information associated with the destination address (i.e. addressee) from headers of IP packets. Accordingly, the processor 1101 may determine which packets are for selective configuration for data transmission. Furthermore, the processor 1101 may further determine whether the obtained data is for a transmission via the cellular connection or for a transmission via the established direct wireless connection based on addressee information (i.e. destination address) in the obtained data. In some examples, the processor 1101 may obtain addressee information from information provided by the application or any other information associated with the obtained data, which the other information represents the addressee.

The processor 1101 may accordingly encode obtained data that is configured to be sent to the further UE, based on the determined proximity result representing that the further UE is within the proximity of a direct wireless communication (i.e. within the proximity of the UE), for a transmission via the established direct wireless connection to the further UE. Accordingly, the further UE may receive data packets including application data that is provided by the application executed by the processor 1101 over the established direct wireless connection, instead of over mobile data communication network via a respective network access node, which may help to reduce latency caused by hops within the mobile data communication network.

Furthermore, in addition, or alternative, to adaptiveness of selective data transmission based on proximity, the processor 1101 may further determine to encode the obtained data via established direct wireless connection or via established cellular connection based on a QoS metric associated with the established cellular connection. The determination for this aspect may further be based on one or more QoS requirements associated with transferring of application data. The QoS requirements may be a predefined QoS metric (e.g. a predefined latency value) or a predetermined QoS metric based on cellular connection conditions and/or direct wireless connection conditions.

For example, assuming that the QoS metric may include latency, and in case the processor 1101 determines that data packets including the application data may be transported via the established cellular connection within the QoS requirements based on the QoS metric (e.g. an estimated latency for transmission over the established cellular connection), the processor 1101 may determine to encode the obtained data via the established cellular connection. Similarly, in case the processor 1101 determines that data packets including the application data cannot be transported via the established cellular connection within the QoS requirements based on the estimated latency, the processor 1101 may encode the obtained data for a direct wireless communication to the further UE.

In some examples, the processor 1101 may further determine to encode the obtained data for a transmission via the cellular connection with another network slice established to communicate the obtained data to the further UE. The another network slice may include a network slice that is designated for URLLC communications. Accordingly, the processor 1101 may encode the obtained data for URLLC communication over the established cellular connection.

A UE may perform URLLC communications in various designated use cases, and the URLLC may support more reliable data delivery with lower latency than conventional cellular communication, or other designated use cases. In accordance with the designated network slice for URLLC, the processor 1101 may cause the communication interface 1103 to perform uplink transmissions without existence of explicit grants. Accordingly, the communication interface 1103 may perform the transmission of radio communication signals including data packets that include application data addressed for the further UE without any scheduling request or grant access. Furthermore, the processor 1101 may encode the obtained data for transmissions in mini-slots that are designated for URLLC according to designated coding scheme for URLLC.

In various examples, the processor 1101 may selectively configure data transmissions for transmitting application data associated with a predefined application over the established cellular connection for URLLC and for other communication types provisioned by the mobile communication network. The processor 1101 may determine to perform data transmission for application data associated with a predefined application based on a QoS metric associated with the established cellular connection and actual measured or estimated QoS performance of the established cellular connection in which other communication types are being used. The determination for this aspect may further be based on one or more QoS requirements associated with transferring of application data (i.e. application QoS requirements). The QoS requirements may be a predefined QoS metric (e.g. a predefined latency value) or a predetermined QoS metric based on cellular connection conditions.

For example, assuming that the QoS metric may include latency, and in case the processor 1101 determines that data packets including the application data may be transported via the established cellular connection using network slices other than the network slice designated for URLLC communication (i.e. other network slices) based on the QoS metric (e.g. an estimated latency for transmission using one of the other network slices), the processor 1101 may determine to encode the obtained data using one of the other network slices, in case the estimated latency of the one of the other network slices is below a predefined latency value or a latency value indicated in QoS requirements associated with the respective application. Similarly, in case the processor 1101 determines that data packets including the application data cannot be transported according to the QoS requirements based on the estimated latency, the processor 1101 may determine to perform transmission including the application data via URLLC communication.

It is to be noted that opportunities and allocations/provisioning performing URRLC communications may be limited, and in order to offload data to be exchanged with the further UE to another transport, the mobile communication network may have certain constraints. Accordingly, the processor 1101 may be configured to prioritize data transmission via established cellular connection using the other network slices as long as the desired QoS associated with the application data is maintained. In case, the desired QoS associated with transferring the application data over the established connection using the other network slices is not maintained, the processor 1101 may be configured to prioritize transferring data via use of D2D communications in case the addressee of the application data is within the proximity. In case the proximity result represents that the addressee is not within the proximity of the UE, the processor 1101 may, only then, configure data transmissions to transfer application data to the addressee via the use of URLLC.

In some examples, the communication interface 1103 may further include a WLAN transceiver, and the processor 1101 may be configured to configure data transmissions according to a WLAN communication protocol. The processor 1101 may further determine to configure data transmissions to send application data to the further UE via an established WLAN connection with a WLAN access point. In some examples, the processor 1101 may determine to configure data transmissions over the established WLAN connection based on QoS metric associated with the established WLAN connection.

FIG. 12 shows an example of a prioritization procedure associated with selective data transmissions. A processor (e.g. the processor 1101) of a UE may execute various instructions to perform the procedure 1200. The procedure 1200 may include obtaining 1201 application data that is configured to be sent to a further communication device (e.g. further UE). For this purpose, a designated application, for which selective data transmission operations are to be performed, may provide application data to a particular layer of a respective protocol stack. In some examples, the processor may perform this procedure at the application layer, exemplarily by an interface software executed by the processor.

The processor may further access to QoS requirements associated with the transfer of application data (e.g. a maximum latency value). The designated application may provide information associated with the QoS requirements, or the processor may access to a memory (e.g. the memory 1102) to obtain the information associated with the QoS requirements. Furthermore, the processor may obtain 1202 QoS metric associated with established cellular connection via a use of a network slice that is not designated for URLLC (e.g. an estimated latency value, or a measured latency value, or a latency indicator provided by the network).

The processor may determine 1203 whether the obtained QoS metric meets conditions represented by the QoS requirements. The processor may compare the obtained QoS metric with the QoS requirements and determine whether the QoS associated with selectable network slices (that are not designated for URLLC) is acceptable. If the QoS is acceptable, the processor may configure 1204 data transmissions via corresponding network slice that is not designated for URLLC over the established cellular connection.

In case the processor determines 1203 that the QoS is not acceptable, the processor may initiate 1205 a discovery procedure to discover UEs within the proximity. The initiated discovery procedure may include a ProSe discovery procedure of which various details of discovery are provided in this disclosure. For this purpose, the processor may encode a discovery request to a ProSe function of the mobile communication network over the established cellular connection in order to be authorized to access the discovery services and perform direct discovery. The discovery request may include various information to be used by the ProSe related network functions to determine the authorization of the UE.

In particular, within various aspects provided herein, a discovery request may include an application layer ID (an application ID, an application layer user ID, or an application layer group ID) that may represent various aspects associated with the designated application. With the involvement of an application layer ID, the processor may other UEs that are configured to execute the designated application. Assuming that the addressee of the application data has registered to ProSe discovery by indicating the designated application, the processor may obtain information about other UEs within the proximity which may be configured to execute the designated application. Based on a received discovery response as a response to a discovery request, the UE may start announcing, which the further UE may have already started.

When a ProSe function detects that a monitoring UE is in the vicinity of an announcing UE, the ProSe function may send to the monitoring UE information representing that there is an announcing UE within the vicinity of the monitoring UE. The information (e.g. an announcing alert) may include an application layer user identity (RPAUID) allocated by the ProSe application server (e.g. what the announcing UE is interested to announce), an application layer ID, a discovery entry ID, etc. Accordingly, the monitoring UE may determine that the further UE (i.e. an announcing UE) is within the proximity. Similar signaling may also include for assisted discovery via a proximity alert performed by a ProSe function. The ProSe function may send a proximity alert based on a detection that a UE is within proximity into the further UE. The ProSe function(s) may accordingly send proximity alerts to UEs that are within the proximity, and the respective UEs may determine that there is the further UE within the proximity based on a received proximity alert.

Accordingly, based on received information from the ProSe function, which may include an identifier of discovered UEs, and the processor may accordingly make a decision about whether the further UE is within the proximity, as exemplified in this illustrative example, and therefore the processor may determine 1206 whether the further UE is within the proximity at which the UE may establish direct connections. In some examples, the processor may simply receive information about discovered UEs and may communicate with discovered UEs to determine whether the further UE is among the discovered UEs.

In case the processor determines 1206 that the further UE is within the proximity to the UE, the processor may initiate 1207 an establishment of direct wireless connection with the further UE. Once there is an established direct wireless connection (e.g. a D2D connection, a ProSe Direct Connection) between the UE and the further UE, the UE may configure 1208 data transmissions to transfer application data of the designated application to the further UE via the established direct wireless connection. In various aspects, the processor may cause the UE to perform sidelink transmissions to send application data to the further UE. It is to be noted that until establishment of direct wireless connection, the processor may configure data transmissions via corresponding network slice (i.e. 1204).

In case the processor determines 1206 that the further UE is not within the proximity to the UE, the processor may request 1209 a network slice for URRLC from the mobile communication network. Once the UE is provisioned for the network slice configured for URLLC, the processor may configure 1210 data transmissions via provisioned URRLC network slice to transfer application data to the further UE. It is to be noted that until provisioning of URLLC network slice, the processor may configure data transmissions via available network slice (i.e. 1204).

It is to be noted that the procedure 1200 intends to illustrate the scenario in which there are no previous configurations associated with establishment of direct wireless connection or request/provisioning of URLLC network slice. Although the processor may perform this procedure for each obtained application data, once the procedure 1200 performed for an obtained application data, the processor may store a configuration representative of the selected data transmission configuration, and the processor may configure data transmissions for further obtainments of application data based on the stored configuration (i.e. according to the selected data transmission configuration) until a predefined change is detected for the respective stored configuration (e.g. disconnection of direct wireless connection, expiry of URLLC network slice provision, etc.).

In some aspects, the processor may have established a D2D connection with the further UE, and the processor of the UE may accordingly obtain application data that is configured to be sent to the further UE, and encode the obtained application data according to a D2D communication protocol of corresponding cellular communication standard to transmit radio communication signals including encoded data via the established D2D connection. In this stored configuration which may represent that the obtained application data associated with the designated application are to be sent to the further UE over the established D2D connection, a predefined change may include a change associated with the proximity of the further UE to the UE.

The processor may monitor the proximity of the further UE via a means to monitor proximity, which may be ProSe messages received from the ProSe function of the mobile communication network. UE and the further UE may send their location information to the ProSe function, or to each other over the established D2D connection, such that the processor may, based on received location information, detect that the distance between the UE and the further UE increases, or has been increased. In one example, the location information may include UE location reports according to ProSe discovery procedure. Based on UE location reports of the further UE, the processor may determine, based on received UE location of the further UE or based on a ProSe message representing that the distance between the UE and the further UE has been increased or increases, the processor may initiate the procedure 1200 from the beginning, or simply configure data transmissions including the application data to the further UE via the established cellular connection according to an available network slice, or in some examples according to a provisioned URLLC network slice.

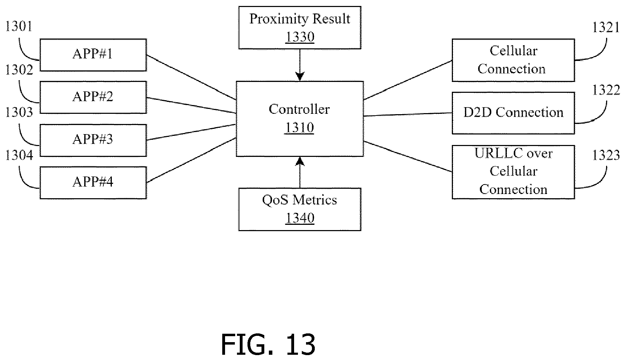

FIG. 13 shows an exemplary illustration with respect to control of communication operations with respect to the application data. The illustration includes a controller 1310 of a UE, that a processor (e.g. the processor 1101) may implement, controlling how data communication including application data of multiple applications 1301, 1302, 1303, 1304, are selectively configured. The controller 1310 may include a packet scheduler, and may be referred to as a real-time packet scheduler within this disclosure. The illustration intends to provide disclosure for encoding data, but the controller may operate similarly for the decoding of data. In some examples, for decoding part, the processor may use designated configuration information representing which connection is to be mapped to which applications, instead of blocks associated with proximity results 1330 and QoS metrics 1340.

The controller 1310 may route received packets selectively for D2D connection 1322, for latency-resilient network slice via an established cellular connection 1323, or for non-latency resilient network slice via the established cellular connection 1321. The disclosure already includes various examples to configure data transmissions, for example with respect to FIG. 11, through which received packets may be routed as exemplarily provided herein.

Illustratively, the first application 1301 may be a data storage application, the second application 1302 may be a real-time application, such as gaming application, the third application 1303 may be a remote desktop application, and the fourth application 1304 may be a productivity application. In this illustrative example, the controller 1310 may be configured to selectively configure communications for the application data provided by the second application 1302 via a D2D connection 1322 to the addressee of the respective application data, via an established cellular connection using a latency resilient network slice 1323 (e.g. an URLLC network slice), or via the established cellular connection using a network slice that is not latency resilient (e.g. non-URLLC network slice). For any one of the first application 1301, the third application 1303, the fourth application 1304, the controller may configure communication via the established cellular connection using non-latency resilient network slice.

In some aspects, the controller 1310 may reside in a layer, or parallel to a layer, of a cellular protocol stack designated for user plane data communication. In some examples, the UE may have established a session with a further UE to exchange data for the second application 1302 via the established session. Accordingly, the controller 1310 may reside in a layer between the session layer of the protocol stack and the physical layer of the protocol stack. The controller 1310 may accordingly determine if a received data packet includes application data of the second application 1302 based on a session identifier of the established session. In such an example, the controller 1310 may check each received packet and determine if the received data packet includes the application data of the second application 1302, or application data of other applications, based on an identifier of the application. Furthermore, the controller 1310 may further check each received packet and determine if the received data packet is configured for a transmission to the further UE, or for transmissions to other UEs that are not the further UE based on an identifier representative of the addressee, (e.g. an identifier of the further UE, such as an IP address, a MAC address, etc.).

Based on application providing the application data included in data packets, and/or the destination of the application data, the controller 1310 may route packets accordingly to further layers of the respective protocol stack for respective communication operations. Accordingly, data packets including application data of the second application 1302 may be routed for respective layer of the protocol stack used to perform D2D communications. Data packets including application data of other applications may be routed for respective layer of the protocol stack used to perform cellular communication to for user plane transfer.

The controller 1310 may further perform the routing of the packets based on determined proximity result 1330 that is representative of whether the further UE is within the proximity of the UE. The controller 1310 may accordingly route data packets including application data of the second application 1302 for the D2D connection in case the determined proximity result indicates that the further UE is within the proximity of the UE. In various examples, the routing of application data of the second application 1302 for the D2D condition may be conditioned to an existence of a D2D connection with the further UE. In such an example, the controller 1310 may route data packets including application data of the second application 1302 for the D2D connection in case there is an established D2D connection with the further UE.

In various examples, the controller 1310 may be configured to configure communications for data packets including the application data of the second application 1302. The controller may configure communication for data packets including the application data of the second application 1302 based on QoS metrics 1340 associated with established cellular connection and QoS requirements associated with the data packets. In some examples, the data packets may include information associated with the QoS requirements (e.g. a QoS identifier). In some examples, the controller 1310 may obtain QoS requirements from a memory.

In accordance with provided illustrative example associated with the controller 1310 that is configured to route data packets, a processor may be configured to implement various aspects provided in this disclosure. For example, via the use of the controller 1310, the processor may initiate appropriate D2D connections, or perform operations to operate according to a latency resilient network slice (e.g. via URLLC network slice). Furthermore, the processor may register for ProSe in response to a detection of application data of a real-time application. In various examples, the ProSe registration may include registration on behalf of the respective real-time application (i.e. ProSe registration with an application identifier representing the real-time application.

When there is an established session between the UE and a further UE used to exchange application data of the respective real-time application, and in case the processor determines that the further UE is within the proximity, the UE may establish a D2D connection with the further UE. The processor may determine the proximity result based on ProSe messages received from a ProSe function of the mobile communication network, and accordingly, the controller may, based on the determined proximity result representing that the further UE is within the proximity, the controller 1310 may initiate establishment of the D2D connection, and start offloading data packets including application data of the real-time application to the D2D connection. The controller 1310 may offload, for example gaming data packets as data packets including application data of the real-time application which is a gaming application, to D2D connection for a sidelink transmission. Accordingly, communication interface may transmit radio communication signals via sidelink communication channel established between the UE and the further UE. Meanwhile, the controller 1310 may cause other data packets to be routed conventionally, via established cellular connection or via an established WLAN connection, etc.

In some examples, the controller 1310 may offload data packets including application data of the real-time application for URLLC over the established cellular connection via use of a network slice designated for URLLC. Exemplarily, the URLLC may provide approximately 10 ms end-to-end latency, while D2D sidelink may provide less than 10 ms latency. Furthermore, sidelink transmissions may consume less power, hence it may improve battery life of the UE. Furthermore, the monitoring of the proximity between the UE and the further UE, and a transition of transfer of data packets including application data of the real-time application from D2D connection to transfer of data packets via the established cellular connection before the disconnection of the established D2D connection may enhance user experience considerably.

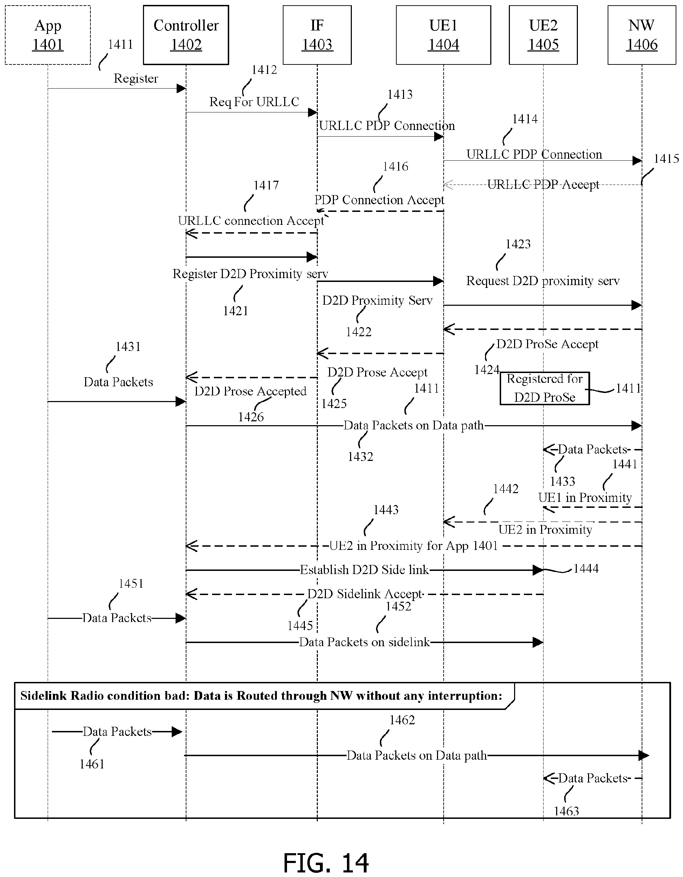

FIG. 14 shows an exemplary illustration of exchange of information in accordance with various aspects of this disclosure. The exchange of information illustrated here may include exchange of information between a real time application 1401 (e.g. a real-time application executed by a processor (e.g. the processor 1101)), a controller 1402 (e.g. the controller 1310) configured to route packets, a mobile interface 1403 (i.e. a mobile broadband interface model (e.g. the communication interface)), a UE 1404 including the application 1401, the controller 1402, and the mobile interface 1403, a further UE 1405, and a mobile communication network 1406.

In this illustrative example, the application 1401 may send a register request 1411 for a latency resilient network. The controller 1402 may, based on a received register request, request for a URLLC service 1412 to the mobile interface 1403. The mobile interface 1403 may, based on received request for a URLLC service, encode a URLLC packet data protocol (PDP) network slice request 1413 to establish a URLLC PDP connection. The UE 1404 may accordingly send the request 1414 to establish the URLLC PDP connection. The responsible entity of the mobile communication network (e.g. a UDM) may check and approve the request, and accordingly, the UE 1404 may receive URLLC PDP acceptance 1415. The mobile interface 1403 may inform 1417, based on received URLLC PDP acceptance 1416, the controller 1402 that a URLLC PDP connection request has been accepted. Based on the received information 1417, the controller 1402 may configure its operations by setting a URLLC information representing that URLLC may be performed.

Furthermore, the controller 1402 may instruct the mobile interface 1403 to register for ProSe 1421. The controller 1402 may further indicate an application identifier of the application 1401 to the mobile interface 1403. The mobile interface 1403 may accordingly encode a ProSe request 1422 to register the UE 1404 to the ProSe. The register of ProSe may include registering to ProSe with an identifier of the application 1401. Accordingly, the UE 1404 may send a ProSe request 1423 including the application identifier. A ProSe function of the mobile communication network 1406 may check and approve the ProSe request. Accordingly, the UE 1404 may receive a ProSe response 1424 representing the acceptance of the ProSe. The mobile interface 1403 may, based on a received ProSe response information 1425, inform the controller 1402 that the Prose request is accepted. Accordingly, the controller 1402 may configure its operations by setting a D2D information representing that ProSe is established. Meanwhile, the further UE 1405 may also be registered for the ProSe 1426.

In regular operations which includes a configuration without any offloading performed for the application 1401, the controller 1402 may configure transmissions to transmit application data by routing 1432 received data packets 1431 including application data via an established cellular connection to the mobile communication network 1406. Accordingly, the network access node of the cell which the UE 1404 is connected may receive radio communication signals carrying data packets including application data of the application 1401. The network access node may pass data packets to corresponding service gateway to the data communication network. Network access node which the further UE 1405 is connected to may receive data packets and send 1433 radio communication signals carrying the data packets to the further UE.

When the UE 1404 and the further UE 1405 are within the proximity, the ProSe function may detect that the UE1404 and the further UE 1405 is within the same vicinity. Accordingly, the mobile communication network 1406, via corresponding ProSe function(s), may send 1441 information representing that the UE 1404 is within the proximity (a proximity alert, an announcing alert) to the further UE 1405. The mobile communication network 1406 may similarly send 1442 information representing that further UE is within the proximity to the UE 1404. The controller 1402 may, based on received proximity information 1443, determine a proximity result representing that the further UE 1405 is within the proximity. The controller 1402 may cause 1444 the UE 1404 to establish a D2D sidelink connection with the further UE 1405. The further UE 1405 may receive the connection request and accept 1445 the establishment of the D2D sidelink connection. Based on the establishment of the D2D sidelink connection, the controller 1402 may start routing 1452 received data packets 1451 including application data of the application 1401 via the established D2D sidelink connection. Accordingly, the UE 1404 may perform sidelink transmissions 1452 to the further UE 1405 to transfer data packets routed for the established D2S connection.

Furthermore, the controller 1402 may monitor proximity between the UE 1404 and the further UE 1405. Additionally, or alternatively, the controller 1402 may obtain information representing that radio communication conditions of the established D2D sidelink connection is above a predefined threshold. For this purpose, the controller 1402 may obtain measurements associated with the established D2D sidelink connection, such as RSRPs, RSSIs, etc. The corresponding threshold may be a threshold associated with the measurements, such as an RSSI threshold. Accordingly, the controller 1402 may determine to re-route data packets including application data of the application 1401 via the established cellular connection. In one example, since the controller 1402 has configured itself with the enablement of the URLLC network slice, the controller 1402 may route 1462 received data packets 1461 including application data of the application 1401 for a transmission 1462 using the URLLC network slice. Accordingly, the further UE 1405 may receive data packets including the application data from the mobile communication network 1463.

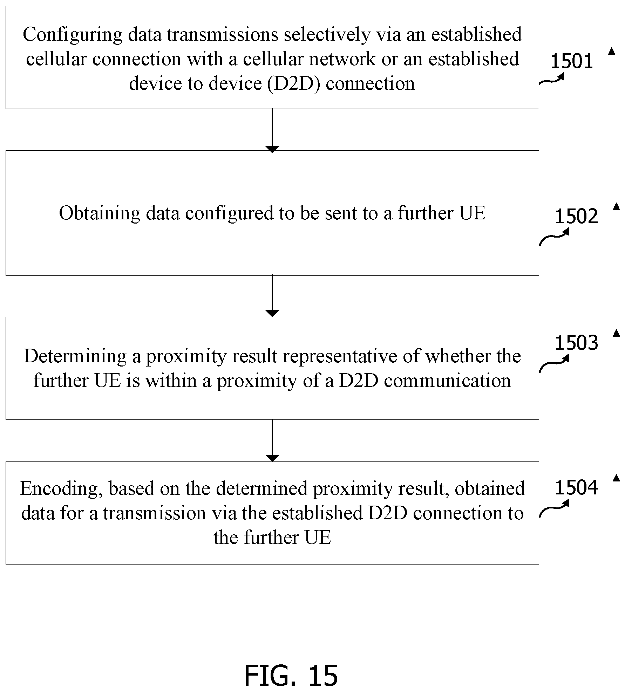

FIG. 15 shows an example of a method for a UE, the method may include: configuring 1501 data transmissions selectively via an established cellular connection with a cellular network or an established device to device (D2D) connection; obtaining 1502 data configured to be sent to a further UE; determining 1503 a proximity result representative of whether the further UE is within a proximity of a D2D communication; encoding 1504, based on the determined proximity result, obtained data for a transmission via the established D2D connection to the further UE.

The following examples pertain to further aspects of this disclosure.

In example 1A. the subject matter includes an apparatus for a user equipment (UE), the apparatus may include: a processor configured to: establish a direct wireless connection with a further UE; decode cellular network information received from the further UE via direct communication over the established direct wireless connection, can optionally include that the cellular network information includes information associated with a cell selected by the further UE for cellular communication; configure cellular communications with a cellular network access node of the cell based on the decoded cellular network information.

In example 2A, the subject matter of example 1A, can optionally include that the cell includes a cell on which the further UE is camped, or to which the further UE is connected. In example 3A, the subject matter of example 1A or example 2A, can optionally include that the processor is further configured to discover UEs that are capable of ProSe direct communications based on a ProSe discovery service according to radio parameters stored in a memory. In example 4A, the subject matter of example 3A, can optionally include that the processor is further configured to select the further UE from discovered UEs based on obtained public land mobile network (PLMN) information associated with the discovered UEs. In example 5A, the subject matter of any one of examples 1A to 4A, can optionally include that the processor is further configured to establish the direct wireless connection according to one of a wireless-fidelity (Wi-Fi) Direct communication technology, a Bluetooth communication technology, a near field communication (NFC) technology, a cellular D2D communication technology, or a further D2D communication technology provisioned by the ProSe services.

In example 6A, the subject matter of any one of examples 1A to 5A, can optionally include that the processor is further configured to establish the direct wireless connection with the further UE before initiating a cell selection procedure associated with the cellular communications to select a cell. In example 7A, the subject matter of example 6A, can optionally include that the processor is further configured to perform the cell selection procedure in case, for a predefined period of time, at least one of: the processor is unable to discover UEs that are capable of direct communications, the processor is unable to establish a direct wireless connection, the UE is unable to receive cellular network information over the established direct wireless connection. In example 8A, the subject matter of any one of examples 1A to 7A, can optionally include that the cellular network information includes cell information may include at least one of: an identifier of the cell, an identifier of the cellular network access node, an identifier of a mobile network operator, PLMN information, available and/or used frequency bands for the cellular connection, mobile network code and/or mobile country code, availability of radio access technologies associated with the cellular connection, availability of other radio access technologies that are available to the further UE, received location area (LA) information, and/or received tracking area (TA) information.

In example 9A, the subject matter of any one of examples 1A to 8A, can optionally include that the processor is further configured to: obtain cell selection measurements for the cell; select the cell in case the cell meets cell selection criterion based on the obtained cell selection measurements. In example 10A, the subject matter of example 9A, can optionally include that the processor is further configured to perform measurements based on the cellular network information to obtain the cell selection measurements. In example 11A, the subject matter of example 9A or example 10A, can optionally include that the cellular network information further includes cell selection measurement information representative of cell selection measurements associated with the cell performed by the further UE; can optionally include that the processor is further configured to select the cell based on the measurement information. In example 12A, the subject matter of any one of examples 1A to 11A, can optionally include that the processor is further configured to perform the cellular communications according to the decoded cellular network information to camp on the cell.

In example 13A, the subject matter of any one of examples 1A to 12A, can optionally include that the decoded cellular network information includes reselection information representative of a cell reselection decision of the further UE; can optionally include that the processor is further configured to perform a cell reselection based on the reselection information. In example 14A, the subject matter of example 13A, can optionally include that the reselection information further includes cell parameters associated with a further cell to be selected. In example 15A, the subject matter of example 13A or example 14A, can optionally include that the processor is further configured to encode a request information for a transmission to the further UE; can optionally include that the request information includes information representing a request of cell information or a request of reselection information. In example 16A, the subject matter of any one of examples 1A to 15A, can optionally include that the processor is further configured to encode a further request information for a transmission to the further UE; can optionally include that the further request information is representative of a request of information associated one or more attributes of the cell which the further UE is camped on; can optionally include that the processor is further configured to decode further information received from the further UE in response to the transmission of the further request information; can optionally include that the decoded further information includes information representing the requested one or more attributes.

In example 17A, the subject matter of any one of examples 1A to 16A, further may include a transceiver configured to transmit and/or receive cellular radio communication signals. In example 18A, the subject matter of any one of examples 1A to 17A, further may include a wireless local area network (WLAN) transceiver configured to transmit and/or receive WLAN radio communication signals. In example 19A, the subject matter of any one of examples 1A to 18A, further may include a memory configured to store information associated with the further UE to establish the ProSe connection. In example 20A, the subject matter of example 19A, can optionally include that the stored information associated with the further UE includes PLMN information representing one or more PLMNs previously selected by the further UE. In example 21A, the subject matter of any one of examples 1A to 20A, can optionally include that the cellular network information further includes neighbor cell information representative of neighbor cell measurements performed by the further UE during an idle mode; can optionally include that the processor is further configured to configure the cellular communications based on the neighbor cell information.

In example 22A, the subject matter of any one of examples 1A to 21A, can optionally include that the cellular network information further includes beamforming information representative of a beam direction; can optionally include that the processor is further configured to configure the cellular communications by selecting the beam. In example 23A, the subject matter of any one of examples 1A to 22A, can optionally include that the cellular network information further includes a common message for a group received by the further UE from the cellular network; can optionally include that the processor is further configured to configure the cellular communication in case the UE is a member of the group.

In example 24A, the subject matter includes a method for a UE, the method may include: establishing a direct wireless connection with a further UE; decoding cellular network information received via direct wireless communication over the established direct wireless connection from the further UE, can optionally include that the cellular network information includes information associated with a cell selected by the further UE for cellular communication; configuring cellular communications with a cellular network access node of the cell based on the decoded cellular network information.

In example 25A, the subject matter of example 24A, can optionally include that the cell includes a cell on which the further UE is camped, or to which the further UE is connected. In example 26A, the subject matter of example 24A or example 25A, further may include: discovering UEs that are capable of ProSe direct communications based on a ProSe discovery service according to radio parameters stored in a memory. In example 27A, the subject matter of example 26A, further may include: selecting the further UE from discovered UEs based on obtained public land mobile network (PLMN) information associated with the discovered UEs. In example 28A, the subject matter of any one of examples 24A to 27A, further may include: establishing the direct wireless connection according to one of a wireless-fidelity (Wi-Fi) Direct communication technology, a Bluetooth communication technology, a near field communication (NFC) technology, a cellular D2D communication technology, or a further D2D communication technology provisioned by the ProSe services.

In example 29A, the subject matter of any one of examples 24A to 28A, further may include: establishing the direct wireless connection with the further UE before initiating a cell selection procedure associated with the cellular communications to select a cell. In example 30A, the subject matter of example 29A, further may include: performing the cell selection procedure in case, for a predefined period of time, at least one of: the processor is unable to discover UEs that are capable of direct communications, the processor is unable to establish a direct wireless connection, the UE is unable to receive cellular network information over the established direct wireless connection. In example 31A, the subject matter of any one of examples 24A to 30A, can optionally include that the cellular network information includes cell information may include at least one of: an identifier of the cell, an identifier of the cellular network access node, an identifier of a mobile network operator, PLMN information, available and/or used frequency bands for the cellular connection, mobile network code and/or mobile country code, availability of radio access technologies associated with the cellular connection, availability of other radio access technologies that are available to the further UE, received location area (LA) information, and/or received tracking area (TA) information.

In example 32A, the subject matter of any one of examples 24A to 31A, further may include: obtaining cell selection measurements for the cell; selecting the cell in case the cell meets cell selection criterion based on the obtained cell selection measurements. In example 33A, the subject matter of example 32A, further may include: performing measurements based on the cellular network information to obtain the cell selection measurements. In example 34A, the subject matter of example 32A or example 33A, can optionally include that the cellular network information further includes cell selection measurement information representative of cell selection measurements associated with the cell performed by the further UE; can optionally include that the method further includes selecting the cell based on the measurement information. In example 35A, the subject matter of any one of examples 24A to 34A, further may include: performing the cellular communications according to the decoded cellular network information to camp on the cell. In example 36A, the subject matter of any one of examples 24A to 35A, can optionally include that the decoded cellular network information includes reselection information representative of a cell reselection decision of the further UE; can optionally include that the method further includes performing a cell reselection based on the reselection information.

In example 37A, the subject matter of example 36A, can optionally include that the reselection information further includes cell parameters associated with a further cell to be selected. In example 38A, the subject matter of example 36A or example 37A, further may include: encoding a request information for a transmission to the further UE; can optionally include that the request information includes information representing a request of cell information or a request of reselection information. In example 39A, the subject matter of any one of examples 24A to 38A, further may include: encoding a further request information for a transmission to the further UE; can optionally include that the further request information is representative of a request of information associated one or more attributes of the cell which the further UE is camped on; decoding further information received from the further UE in response to the transmission of the further request information; can optionally include that the decoded further information includes information representing the requested one or more attributes.

In example 40A, the subject matter of any one of examples 24A to 39A, further may include a transceiver configured to transmit and/or receive cellular radio communication signals. In example 41A, the subject matter of any one of examples 24A to 40A, further may include: transmitting and/or receiving WLAN radio communication signals. In example 42A, the subject matter of any one of examples 24A to 41A, further may include: storing information associated with the further UE to establish the ProSe connection. In example 43A, the subject matter of example 42A, further may include: can optionally include that the stored information associated with the further UE includes PLMN information representing one or more PLMNs previously selected by the further UE. In example 44A, the subject matter of any one of examples 1A to 43A, further may include: can optionally include that the cellular network information further includes neighbor cell information representative of neighbor cell measurements performed by the further UE during an idle mode; can optionally include that the method further includes configuring the cellular communications based on the neighbor cell information.

In example 45A, the subject matter of any one of examples 1A to 44A, can optionally include that the cellular network information further includes beamforming information representative of a beam direction; can optionally include that the method further includes configuring the cellular communications by selecting the beam. In example 46A, the subject matter of any one of examples 1A to 45A, can optionally include that the cellular network information further includes a common message for a group received by the further UE from the cellular network; can optionally include that the method further includes configuring the cellular communication in case the UE is a member of the group.

In example 47A, a non-transitory computer-readable medium may include one or more instructions which, if executed by a processor for a UE, cause the processor to: establish a direct wireless connection with a further UE; decode cellular network information received via direct wireless communication over the established direct wireless connection from the further UE, can optionally include that the decoded cellular network information includes information associated with a cell selected by the further UE for cellular communication; configure cellular communications with a cellular network access node of the cell based on the decoded cellular network information. In example 48A, non-transitory computer-readable medium may include one or more instructions which, if executed by a processor, cause the processor to perform the method according to any one of examples 24 to 46A.

In example 49A, a user equipment (UE) may include: a processor configured to: obtain cellular network information by performing a direct communication over an established direct wireless connection with a further UE; decode the obtained cellular network information to obtain cell parameters associated with a cell to which the further UE is communicatively coupled to; configure a cellular connection with the cell based on the obtained cell parameters. In example 50A, the user equipment of example 49A, can optionally include that the UE is further configured to perform any aspects provided in this disclosure, in particular according to any one of aspects provided in any one of examples 1A to 23A.

In example 51A, the subject matter includes an apparatus for a user equipment (UE), the apparatus may include: a processor configured to: obtain a channel measurement for a radio communication channel associated with a network access node of a cell; determine a cell reselection result based on the obtained channel measurement, can optionally include that the determined cell reselection result represents whether to perform a cell reselection or not; encode information representing the determined cell reselection result for a transmission via a direct wireless communication to a further UE.

In example 52A, the subject matter of example 51A, can optionally include that the processor is further configured to encode the information representing the determined cell reselection result, in case the cell reselection result is determined to perform the cell reselection. In example 53A, the subject matter of example 51A or example 52A, can optionally include that the processor is further configured to encode the information representing the determined cell reselection result based on public land mobile network (PLMN) information associated with the further UE. In example 54A, the subject matter of any one of examples 51A to 53A, can optionally include that the processor is further configured to encode the information representing the determined cell reselection result based on a received request from the further UE. In example 55A, the subject matter of any one of examples 51A to 54A, can optionally include that the cell includes a cell on which the UE is camped, or to which the UE is connected.

In example 56A, the subject matter of any one of examples 51A to 55A, can optionally include that the direct wireless communication includes a direct proximity services (ProSe) communication with the further UE. In example 57A, the subject matter of example 56A, can optionally include that the processor is further configured to discover UEs that are capable of ProSe direct communications based on a ProSe discovery service according to radio parameters stored in a memory. In example 58A, the subject matter of example 57A, can optionally include that the processor is further configured to select the further UE from discovered UEs based on obtained public land mobile network (PLMN) information associated with the discovered UEs. In example 59A, the subject matter of any one of examples 56A to 58A, can optionally include that the processor is further configured to establish a direct wireless connection according to a wireless-fidelity (Wi-Fi) Direct communication, a Bluetooth communication technology, a near field communication (NFC) technology, a cellular D2D communication technology, or a further D2D communication technology provisioned by the ProSe services.

In example 60A, the subj ect matter of any one of examples 51A to 59A, can optionally include that the channel measurement includes at least one of a reference signal received power (RSRP) measurement or a reference signal received quality (RSRQ) measurement. In example 61A, the subject matter of any one of examples 51A to 60A, can optionally include that the processor is further configured to determine the cell reselection result based on predefined cell reselection criteria. In example 62A, the subject matter of any one of examples 51A to 61A, can optionally include that the encoded information further includes measurement information representative of the obtained channel measurement.

In example 63A, the subj ect matter of any one of examples 51A to 62A, can optionally include that the processor is further configured to encode cellular network information for a transmission via the direct wireless communication to the further UE, can optionally include that the cellular network information includes information associated with a selected cell for cellular communication. In example 64A, the subject matter of example 63A, can optionally include that the cellular network information includes cell information may include at least one of: an identifier of the cell, an identifier of the cellular network access node, an identifier of a mobile network operator, public land mobile network information, available and/or used frequency bands for the cellular connection, mobile network code and/or mobile country code, availability of radio access technologies associated with the cellular connection, availability of other radio access technologies that are available to the further UE, received location area (LA) information, and/or received tracking area (TA) information, neighbor cell information representative of neighbor cell measurements performed by the UE during an idle mode, beamforming information representative of a selected beam direction, a common message for a group received by the UE from the cellular network.

In example 65A, the subject matter of example 63A or example 64A, can optionally include that the cellular network information further includes channel measurement information representative of obtained channel measurement. In example 66A, the subject matter of any one of examples 63A to 65A, can optionally include that the processor is further configured to encode the cellular network information based on a received request from the further UE. In example 67A, the subject matter of any one of examples 51A to 66A, can optionally include that the processor is further configured to decode further request information received from the further UE via the direct wireless communication; can optionally include that the further request information is representative of a request of information associated one or more attributes of the cell; can optionally include that the processor is further configured to encode further information may include information representing the requested one or more attributes for a transmission to the further UE via the direct wireless communication.

In example 68A, the subject matter of any one of examples 51A to 67A, further may include a transceiver configured to transmit and/or receive cellular radio communication signals. In example 69A, the subject matter of any one of examples 51A to 68A, further may include a wireless local area network (WLAN) transceiver configured to transmit and/or receive WLAN radio communication signals. In example 70A, the subject matter of any one of examples 51A to 69A, further may include a memory configured to store information associated with the further UE to configure the direct wireless communication. In example 71A, the subject matter of example 70A, can optionally include that the stored information associated with the further UE includes PLMN information representing one or more PLMNs previously selected by the further UE.

In example 72A, the subject matter includes a method for a UE, the method may include: obtaining a channel measurement for a radio communication channel associated with a network access node of a cell; determining a cell reselection result based on the obtained channel measurement, can optionally include that the determined cell reselection result represents whether to perform a cell reselection or not; encoding information representing the determined cell reselection result for a transmission via an established direct wireless connection to a further UE.

In example 73A, the subject matter of example 72A, further may include: encoding the information representing the determined cell reselection result, in case the cell reselection result is determined to perform the cell reselection. In example 74A, the subject matter of example 72A or example 73A, further may include: encoding the information representing the determined cell reselection result based on public land mobile network (PLMN) information associated with the further UE. In example 75A, the subject matter of any one of examples 72A to 74A, further may include: encoding the information representing the determined cell reselection result based on a received request from the further UE. In example 76A, the subject matter of any one of examples 72A to 75A, can optionally include that the cell includes a cell on which the UE is camped, or to which the UE is connected.

In example 77A, the subject matter of any one of examples 72A to 76A, can optionally include that the direct wireless communication includes a direct proximity services (ProSe) communication with the further UE. In example 78A, the subject matter of example 77A, further may include: discovering UEs that are capable of ProSe direct communications based on a ProSe discovery service according to radio parameters stored in a memory.

In example 79A, the subject matter of example 78A, further may include: selecting the further UE from discovered UEs based on obtained public land mobile network (PLMN) information associated with the discovered UEs. In example 80A, the subject matter of any one of examples 77A to 79A, further may include: establishing a direct wireless connection according to a wireless-fidelity (Wi-Fi) Direct communication, a Bluetooth communication technology, a near field communication (NFC) technology, a cellular D2D communication technology, or a further D2D communication technology provisioned by the ProSe services. In example 81A, the subj ect matter of any one of examples 72A to 80A, can optionally include that the channel measurement includes at least one of a reference signal received power (RSRP) measurement or a reference signal received quality (RSRQ) measurement.

In example 82A, the subj ect matter of any one of examples 72A to 81A, further may include: determining the cell reselection result based on predefined cell reselection criteria. In example 83A, the subject matter of any one of examples 72A to 82A, can optionally include that the encoded information further includes measurement information representative of the obtained channel measurement. In example 84A, the subject matter of any one of examples 72A to 83A, further may include: encoding cellular network information for a transmission via the direct wireless communication to the further UE, can optionally include that the cellular network information includes information associated with a selected cell for cellular communication.

In example 85A, the subject matter of example 84A, can optionally include that the cellular network information includes cell information may include at least one of: an identifier of the cell, an identifier of the cellular network access node, an identifier of a mobile network operator, public land mobile network information, available and/or used frequency bands for the cellular connection, mobile network code and/or mobile country code, availability of radio access technologies associated with the cellular connection, availability of other radio access technologies that are available to the further UE, received location area (LA) information, and/or received tracking area (TA) information, neighbor cell information representative of neighbor cell measurements performed by the UE during an idle mode, beamforming information representative of a selected beam direction, a common message for a group received by the UE from the cellular network.

In example 86A, the subject matter of example 84A or example 85A, can optionally include that the cellular network information further includes channel measurement information representative of obtained channel measurement. In example 87A, the subject matter of any one of examples 84A to 86A, further may include: encoding the cellular network information based on a received request from the further UE. In example 88A, the subject matter of any one of examples 72A to 87A, further may include: decoding further request information received from the further UE via the direct wireless communication; can optionally include that the further request information is representative of a request of information associated one or more attributes of the cell; encoding further information may include information representing the requested one or more attributes for a transmission to the further UE via the direct wireless communication. In example 89A, the subject matter of any one of examples 72A to 88A, further may include: transmitting and/or receiving cellular radio communication signals. In example 90A, the subject matter of any one of examples 72A to 89A, further may include: transmitting and/or receiving WLAN radio communication signals. In example 91A, the subject matter of any one of examples 72A to 90A, further may include: storing information associated with the further UE to configure the direct wireless communication. In example 92A, the subject matter of example 91A, can optionally include that the stored information associated with the further UE includes PLMN information representing one or more PLMNs previously selected by the further UE.

In example 93A, a non-transitory computer-readable medium may include one or more instructions which, if executed by a processor for a UE, cause the processor to: obtain a channel measurement for a radio communication channel associated with a network access node of a cell; determine a cell reselection result based on the obtained channel measurement, can optionally include that the determined cell reselection result represents whether to perform a cell reselection or not; encode information representing the determined cell reselection result for a transmission via an established direct wireless connection to a further UE. In example 94A, non-transitory computer-readable medium may include one or more instructions which, if executed by a processor, cause the processor to perform the method of any one of examples 72A to 92A.

In example 95A, a user equipment (UE) may include: a processor configured to: obtain channel measurements associated with communication channels of cells of a cellular network; evaluate the obtained channel measurements to obtain cell reselection decisions representative of whether to select another cell of the cellular network; encode reselection information representative of at least one of the obtained cell reselection decisions for a direct wireless communication to a further UE. In example 96A, The UE of example 95, can optionally include that the UE is further configured to perform any one of aspects provided in this disclosure, in particular, aspects provided in any one of examples 51A to 71A.

In example 1B, the subject matter includes an apparatus for a user equipment (UE), the apparatus may include: a processor configured to: configure data transmissions selectively via an established cellular connection with a cellular network or an established device to device (D2D) connection; obtain data configured to be sent to a further UE; determine a proximity result representative of whether the further UE is within a proximity of a D2D communication; encode, based on the determined proximity result, obtained data for a transmission via the established D2D connection to the further UE.

In example 2B, the subject matter of example 1B, can optionally include that the processor is further configured to establish the D2D connection with the further UE based on the determined proximity result. In example 3B, the subject matter of example 1B or example 2B, can optionally include that the processor is further configured to determine to encode the obtained data for the transmission via the established D2D connection based on a quality of service (QoS) metric associated with the established cellular connection. In example 4B, the subject matter of example 3B, can optionally include that the processor is further configured to determine to encode the obtained data for the transmission via the established D2D connection based on a predetermined QoS metric threshold. In example 5B, the subject matter of example 3B or example 4B, can optionally include that the processor is further configured to encode, based on the QoS metric, obtained data for a transmission via the established cellular connection through a use of ultra reliable and low latency communications (uRLLC).

In example 6B, the subject matter of any one of examples 1B to 5B, can optionally include that the data is provided by an application configured to operate at an application layer of a protocol stack. In example 7B, the subject matter of example 6B, can optionally include that the processor is further configured to execute a plurality of applications operating at the application layer; can optionally include that the processor is further configured to configure data transmissions selectively for one or more predefined applications of the plurality of applications. In example 8B, the subject matter of example 7B, can optionally include that the processor is further configured to configure data transmissions selectively for the one or more predefined applications of the plurality of applications; can optionally include that the processor is further configured to configure data transmissions via the cellular connection for other applications of the plurality of applications.

In example 9B, the subject matter of example 7B or example 8B, can optionally include that the data includes data of a user plane; can optionally include that the one or more predefined applications of the plurality of applications are further configured to provide control data may include data of a control plane; can optionally include that the processor is further configured to configure data transmissions via the cellular connection for the control data. In example 10B, the subject matter of any one of examples 6B to 9B, can optionally include that the processor is further configured to obtain the data from the application layer; can optionally include that the processor is further configured to control further layers of the protocol stack based on the determined proximity result. In example 11B, the subject matter of any one of examples 1B to 10B, can optionally include that the processor is further configured to establish a session configured to provide the obtained data to the further UE selectively via the established cellular connection or via the established D2D connection.

In example 12B, the subject matter of any one of examples 1B to 11B, can optionally include that the processor is further configured to encode the obtained data for the transmission via the D2D connection in case the determined proximity result is representative of the further UE is within the proximity; can optionally include that the processor is further configured to encode the obtained data for a transmission over the cellular connection in case the determined proximity result is representative of the further UE is not within the proximity. In example 13B, the subject matter of any one of examples 1B to 12B, can optionally include that the transmission via the D2D connection includes a sidelink transmission. In example 14B, the subject matter of example 13B, obtained data to a sidelink connection established for the sidelink transmission.

In example 15B, the subject matter of any one of examples 1B to 14B, can optionally include that the processor is further configured to perform a proximity services (ProSe) discovery to discover UEs within the proximity; can optionally include that the processor is further configured to determine the proximity result based on the discovered UEs. In example 16B, the subject matter of example 15B, can optionally include that the processor is further configured to determine the proximity result based on received proximity information representative of detected UEs within the proximity according to a ProSe discovery procedure. In example 17B, the subject matter of example 15B or example 16B, can optionally include that the processor is further configured to encode application information representative of a provider application configured to provide the data according to the ProSe discovery procedure.

In example 18B, the subject matter of example 17B, can optionally include that the provider application includes at least one of a gaming application, a teleconference application, a video-conference application, or an application for a real-time communication. In example 19B, the subject matter of any one of examples 15B to 18B, can optionally include that the processor is further configured to monitor the proximity of the further UE; can optionally include that the processor is further configured to encode obtained data for a transmission via the cellular connection to the further UE based on the proximity of the further UE. In example 20B, the subject matter of example 19B, can optionally include that the processor is further configured to monitor the proximity of the further UE based on received UE location reports according to the ProSe discovery procedure.

In example 21B, the subject matter of example 19B or example 20B, can optionally include that the processor is further configured to encode the obtained for the transmission via the cellular connection to the further UE based on a detection representing that the distance between the UE and the further UE has increased. In example 22B, the subject matter of any one of examples 15B to 21B, can optionally include that the processor is further configured to encode location reports representing the location of the UE for transmissions according to the ProSe discovery procedure. In example 23B, the subject matter of any one of examples 1B to 22B, can optionally include that the processor is further configured to obtain data to be sent to a plurality of further UEs may include the further UE; can optionally include that the proximity result is representative of whether the plurality of further UEs are within the proximity.

In example 24B, the subject matter of example 23B, can optionally include that the processor is further configured to establish a plurality of D2D connections with the plurality of further UEs; can optionally include that the processor is further configured to encode the obtained data for a plurality of transmissions via the plurality of established D2D connections. In example 25B, the subject matter of example 23B or example 24B, can optionally include that the processor is further configured to establish a group session configured to provide the obtained data to the plurality of further UEs selectively via the established cellular connection or via the established plurality of D2D connections. In example 26B, the subject matter of any one of examples 1B to 25B, can optionally include that the processor is further configured to perform data transmissions via a wireless local area network (WLAN) connection established with a WLAN access point to communicate with the further UE; can optionally include that the processor is further configured to encode the obtained data for a transmission to the further UE via the established WLAN connection.

In example 27B, the subject matter of any one of examples 1B to 26B, further may include a transceiver configured to transmit and/or receive cellular radio communication signals. In example 28B, the subject matter of any one of examples 1B to 27B, further may include a wireless local area network (WLAN) transceiver configured to transmit and/or receive WLAN radio communication signals. In example 29B, the subject matter of any one of examples 1B to 28B, further may include a memory configured to store information the determined proximity result.

In example 30B, the subject matter includes a method for a UE, the method may include: configuring data transmissions selectively via an established cellular connection with a cellular network or an established device to device (D2D) connection; obtaining data configured to be sent to a further UE; determining a proximity result representative of whether the further UE is within a proximity of a D2D communication; encoding, based on the determined proximity result, obtained data for a transmission via the established D2D connection to the further UE.

In example 31B, the subject matter of example 30B, further may include: establishing the D2D connection with the further UE based on the determined proximity result. In example 32B, the subject matter of example 30B or example 31B, further may include: determining to encode the obtained data for the transmission via the established D2D connection based on a quality of service (QoS) metric associated with the established cellular connection. In example 33B, the subject matter of example 32B, further may include: determining to encode the obtained data for the transmission via the established D2D connection based on a predetermined QoS metric threshold.

In example 34B, the subject matter of example 32B or example 33B, further may include: encoding, based on the QoS metric, obtained data for a transmission via the established cellular connection through a use of ultra reliable and low latency communications (uRLLC). In example 35B, the subject matter of any one of examples 30B to 34B, can optionally include that the data is provided by an application configured to operate at an application layer of a protocol stack. In example 36B, the subject matter of example 35B, further may include: executing a plurality of applications operating at the application layer; configuring data transmissions selectively for one or more predefined applications of the plurality of applications. In example 37B, the subject matter of example 36B, further may include: configuring data transmissions selectively for the one or more predefined applications of the plurality of applications; configuring data transmissions via the cellular connection for other applications of the plurality of applications.

In example 38B, the subject matter of example 36B or example 37B, can optionally include that the data includes data of a user plane; can optionally include that the one or more predefined applications of the plurality of applications are further configured to provide control data may include data of a control plane; can optionally include that the method further includes configuring data transmissions via the cellular connection for the control data. In example 39B, the subject matter of any one of examples 35B to 38B, further may include: obtaining the data from the application layer; controlling further layers of the protocol stack based on the determined proximity result.

In example 40B, the subject matter of any one of examples 30B to 39B, further may include: establishing a session configured to provide the obtained data to the further UE selectively via the established cellular connection or via the established D2D connection. In example 41B, the subject matter of any one of examples 30B to 40B, further may include: encoding the obtained data for the transmission via the D2D connection in case the determined proximity result is representative of the further UE is within the proximity; encoding the obtained data for a transmission over the cellular connection in case the determined proximity result is representative of the further UE is not within the proximity. In example 42B, the subject matter of any one of examples 30B to 41B, can optionally include that the transmission via the D2D connection includes a sidelink transmission.

In example 43B, the subject matter of example 42B, obtained data to a sidelink connection established for the sidelink transmission. In example 44B, the subject matter of any one of examples 30B to 43B, further may include: performing a proximity services (ProSe) discovery to discover UEs within the proximity; determining the proximity result based on the discovered UEs. In example 45B, the subject matter of example 44B, further may include: determining the proximity result based on received proximity information representative of detected UEs within the proximity according to a ProSe discovery procedure. In example 46B, the subject matter of example 44B or example 45B, further may include: encoding application information representative of a provider application configured to provide the data according to the ProSe discovery procedure.

In example 47B, the subject matter of example 46B, further may include: can optionally include that the provider application includes at least one of a gaming application, a teleconference application, a video-conference application, or an application for a real-time communication. In example 48B, the subject matter of any one of examples 44B to 47B, further may include: monitoring the proximity of the further UE; encoding obtained data for a transmission via the cellular connection to the further UE based on the proximity of the further UE. In example 49B, the subject matter of example 48B, further may include: monitoring the proximity of the further UE based on received UE location reports according to the ProSe discovery procedure. In example 50B, the subject matter of example 48B or example 49B, further may include: encoding the obtained for the transmission via the cellular connection to the further UE based on a detection representing that the distance between the UE and the further UE has increased.

In example 51B, the subject matter of any one of examples 44B to 50B, further may include: encoding location reports representing the location of the UE for transmissions according to the ProSe discovery procedure. In example 52B, the subject matter of any one of examples 30B to 51B, further may include: obtaining data to be sent to a plurality of further UEs may include the further UE; can optionally include that the proximity result is representative of whether the plurality of further UEs are within the proximity. In example 53B, the subject matter of example 52B, further may include: establishing a plurality of D2D connections with the plurality of further UEs; encoding the obtained data for a plurality of transmissions via the plurality of established D2D connections. In example 54B, the subject matter of example 52B or example 53B, further may include: establishing a group session configured to provide the obtained data to the plurality of further UEs selectively via the established cellular connection or via the established plurality of D2D connections.

In example 55B, the subject matter of any one of examples 30B to 54B, further may include: performing data transmissions via a wireless local area network (WLAN) connection established with a WLAN access point to communicate with the further UE; encoding the obtained data for a transmission to the further UE via the established WLAN connection. In example 56B, the subject matter of any one of examples 30B to 55B, further may include: transmitting and/or receiving cellular radio communication signals. In example 57B, the subject matter of any one of examples 30B to 56B, further may include: transmitting and/or receiving WLAN radio communication signals. In example 58B, the subject matter of any one of examples 30B to 57B, further may include: storing the determined proximity result into a memory.

In example 59B, a non-transitory computer-readable medium may include one or more instructions which, if executed by a processor of a UE, cause the processor to: configure data transmissions selectively via an established cellular connection with a cellular network or an established device to device (D2D) connection; obtain data configured to be sent to a further UE; determine a proximity result representative of whether the further UE is within a proximity of a D2D communication; encode, based on the determined proximity result, obtained data for a transmission via the established D2D connection to the further UE. In example 60B, a non-transitory computer-readable medium may include one or more instructions which, if executed by a processor, cause the processor to perform the method according to any one of examples 30B to 58B.

In example 61B, an apparatus for a user equipment (UE), the apparatus may include: a processor configured to: cause the UE to perform data transmissions selectively via cellular communication over a cellular network or via device to device (D2D) communications; obtain data to be sent to a further UE connected to the cellular network; obtain proximity information representative of whether the further UE is within a proximity of a D2D communication; cause, based on the obtained proximity information, the UE to perform a D2D transmission to send the obtained data over a D2D connection established with the further UE. In example 62B, the subject matter of example 61B, can optionally include that the apparatus is further configured to perform any aspects provided in this disclosure, in particular aspects provided in any one of examples 1B to 29B.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor or 9. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more."

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

The term "antenna", as used herein, may include any suitable configuration, structure and/or arrangement of one or more antenna elements, components, units, assemblies and/or arrays. The antenna may implement transmit and receive functionalities using separate transmit and receive antenna elements. The antenna may implement transmit and receive functionalities using common and/or integrated transmit/receive elements. The antenna may include, for example, a phased array antenna, a single element antenna, a set of switched beam antennas, and/or the like.

It will be understood that when an element is referred to as being "connected" or "coupled" to another element, it can be physically connected or coupled to the other element such that current and/or electromagnetic radiation (e.g., a signal) can flow along a conductive path formed by the elements. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. An apparatus for a user equipment (UE), the apparatus comprising:
a processor configured to:
establish a direct wireless connection with a further UE;
decode cellular network information received from the further UE via direct communication over the established direct wireless connection, wherein the cellular network information comprises information associated with a cell selected by the further UE for cellular communication;
configure cellular communications with a cellular network access node of the cell based on the decoded cellular network information.

2. The apparatus of claim 1,
wherein the processor is further configured to discover UEs that are capable of ProSe direct communications based on a ProSe discovery service;
wherein the processor is further configured to select the further UE from discovered UEs based on obtained public land mobile network (PLMN) information associated with the discovered UEs.

3. The apparatus of claim 1 or claim 2,
wherein the processor is further configured to establish the direct wireless connection according to one of a wireless-fidelity (Wi-Fi) Direct communication technology, a Bluetooth communication technology, a near field communication (NFC) technology, a cellular D2D communication technology, or a further D2D communication technology provisioned by the ProSe services.

4. The apparatus of any one of claims 1 to 3,
wherein the cellular network information comprises cell information comprising at least one of: an identifier of the cell, an identifier of the cellular network access node, an identifier of a mobile network operator, PLMN information, available and/or used frequency bands for the cellular connection, mobile network code and/or mobile country code, availability of radio access technologies associated with the cellular connection, availability of other radio access technologies that are available to the further UE, received location area (LA) information, and/or received tracking area (TA) information.

5. The apparatus of any one of claims 1 to 4,
wherein the processor is further configured to:
obtain cell selection measurements for the cell;
select the cell in case the cell meets cell selection criterion based on the obtained cell selection measurements.

6. The apparatus of any one of claims 1 to 5,
wherein the decoded cellular network information comprises reselection information representative of a cell reselection decision of the further UE;
wherein the processor is further configured to perform a cell reselection based on the reselection information.

7. The apparatus of any one of claims 1 to 6,
wherein the cellular network information further comprises neighbor cell information representative of neighbor cell measurements performed by the further UE during an idle mode;
wherein the processor is further configured to configure the cellular communications based on the neighbor cell information.

8. The apparatus of any one of claims 1 to 7,
wherein the cellular network information further comprises beamforming information representative of a beam direction;
wherein the processor is further configured to configure the cellular communications by selecting the beam.

9. The apparatus of any one of claims 1 to 8,
wherein the cellular network information further comprises a common message for a group received by the further UE from the cellular network;
wherein the processor is further configured to configure the cellular communication in case the UE is a member of the group.

10. An apparatus for a user equipment (UE), the apparatus comprising:
a processor configured to:
obtain a channel measurement for a radio communication channel associated with a network access node of a cell;
determine a cell reselection result based on the obtained channel measurement, wherein the determined cell reselection result represents whether to perform a cell reselection or not;
encode information representing the determined cell reselection result for a transmission via a direct wireless communication to a further UE.

11. The apparatus of claim 10,
wherein the processor is further configured to encode the information representing the determined cell reselection result, in case the cell reselection result is determined to perform the cell reselection.

12. The apparatus of claim 11,
wherein the processor is further configured to discover UEs that are capable of ProSe direct communications based on a ProSe discovery service.

13. The apparatus of any one of claims 10 to 12,
wherein the encoded information further comprises measurement information representative of the obtained channel measurement.

14. The apparatus of any one of claims 10 to 13,
wherein the processor is further configured to encode cellular network information for a transmission to the further UE;
wherein the cellular network information comprises cell information comprising at least one of: an identifier of the cell, an identifier of the cellular network access node, an identifier of a mobile network operator, public land mobile network information, available and/or used frequency bands for the cellular connection, mobile network code and/or mobile country code, availability of radio access technologies associated with the cellular connection, availability of other radio access technologies that are available to the further UE, received location area (LA) information, and/or received tracking area (TA) information, neighbor cell information representative of neighbor cell measurements performed by the UE during an idle mode, beamforming information representative of a selected beam direction, a common message for a group received by the UE from the cellular network.

15. The apparatus of any one of claims 10 to 14,
wherein the processor is further configured to decode further request information received from the further UE via the direct wireless communication;
wherein the further request information is representative of a request of information associated one or more attributes of the cell;
wherein the processor is further configured to encode further information comprising information representing the requested one or more attributes for a transmission to the further UE via the direct wireless communication.
